# EUROPEAN PATENT APPLICATION

(11) **EP 1 093 319 A1**
(43) Date of publication of application: **18.04.2001**
(21) Application number: 99926851.9
(22) Date of filing: 30.06.1999
(51) Int. Cl.: H04Q 9/00, H04L 12/40, G11B 20/10, H04N 5/44

(54) **NETWORK CONTROL SYSTEM AND METHOD THEREFOR**

(30) Priority: 30.06.1998 JP 18375198; 21.07.1998 JP 20465898
(71) Applicant: MATSUSHITA ELECTRIC INDUSTRIAL CO., LTD., Kadoma-shi, Osaka 571-8501 (JP)
(72) Inventor: YANAGAWA, Yoshifumi, Kyoto-shi Kyoto 607-8345 (JP); IITSUKA, Hiroyuki, Katano-shi Osaka 576-0033 (JP)
(74) Representative: Rackham, Stephen Neil
(86) International application number: JP9903518
(87) International publication number: WO0001191

(57) **Abstract**

In a network control system, the device has apparatus information holding units (7, 8) for holding in-device apparatus information which contains apparatus configuration information indicative of the device configuration information and contains operation screen information indicative of the device functions and states and for configuring the device operation screen, and has a version information generation control units (9, 17, 18) for generating the version information to indicate the generation of the change and for carrying out version control when the information held in the apparatus information holding units (7, 8) changes, and when the controller issues a notification request to the device in response to the change of the apparatus information in device, the version information is contained in the response from the device with respect to the notification request, and the controller reads the apparatus information and version information in device from the device and detects the state change inside the device based on the version information, and the controller can quickly and easily detect any state change in the device that occurs due to controls of other controllers or spontaneous changes in the device, and the controller and the device are able to definitely share the same state information.

## Description

### TECHNICAL FIELD

The present invention relates to a network control system for carrying out the operation of the AV apparatus etc. connected on the network via the network, and more specifically to an apparatus control system and a method thereof using graphical user interface (GUI) that supports the user apparatus operation by graphics, characters, etc. on the screen.

### BACKGROUND OF THE INVENTION

In recent years, there has appeared an apparatus control system that displays graphics (icon) comprising screen display data that indicates apparatus functions on the TV screen and characters, etc., chooses and operates these graphics with TV remote controller, and controls the apparatus. In addition, there has also appeared a network system for receiving and transmitting video/audio data by connecting digital apparatus such as DVC, etc. using IEEE1394-1995.

An example of the conventional network control system includes that disclosed in Japanese Unexamined Laid-open Patent Publication No. Hei 9-149325.

Now, one example of the conventional network control system will be discussed.

AV apparatuses are connected with serial bus that can periodically provide equal communication chances to each piece of AV apparatuses with other AV apparatus without change-over connections and in the interactive packet communication system as in the case of the digital interface such a IEEE1394 standard.

Now, each piece of AV apparatus stores its original screen display data by itself, and by the request of the controller (TV receiver) that has a graphic display function, the screen display data is transmitted to the controller and the controller displays the screen display data.

The controller has a function for inquiring the data required for displaying the AV apparatus connected and a function for controlling the display screen on the basis of the screen display data from the AV apparatus.

The AV apparatus has a recording medium for storing the screen display data and a function for choosing the appropriate screen display data for the inquiry of the screen display data made by the controller.

In the network control system configured in this way, the screen display data is stored in each device (AV apparatus) and by outputting the screen display data in accordance with the display request from the controller (TV receiver), graphics original to each device (AV apparatus) is displayed on the controller screen.

### DISCLOSURE OF THE INVENTION

### (Technological Problems to be Solved by the Invention)

However, in the above configuration, when the device changes the operation screen display by the state change of the inside, the state change of the device is unable to be notified from the device to controller, and inconsistency is generated between the display screen information in the controller and the display screen information in the device, causing a problem in that the apparatus operating information is unable to be correctly provided to the user.

In view of the foregoing problem, it is an object of the present invention to provide a network control system and the method thereof in which the configuration is simple and the device can quickly and efficiently notify this state change to the controller when the display of the operation screen is changed due to the state change inside the device, and the controller and the device can definitely share the same state information, and at the same time, the transmission load of the channel, controller processing load, and device processing load are small.

### (Means for Solving the Problems)

In order to solve the above problem, the network control system according to the present invention is characterized by comprising: a controller equipped with a user interface; and a device to be controlled, wherein the device has apparatus information in device and version information indicative of a version of the information inside the device to be updated when the apparatus information in device is updated, and wherein the controller reads the apparatus information and the version information inside the device from the device and detects a change in device by the version information.

The apparatus information in device is state information indicative of a condition of the device, and the device has the state information indicative of the condition of the device and the version information indicative of the version of the state information to be updated when the state information is updated, and the controller reads the state information and the version information from the device and detects the change of the device by the version information.

The controller issues a notification request to the device for requesting notification of the change of the state information when the controller uses the state information of the device, and receives the version information as the primary response to the notification request, and when the state information is changed in the device, the controller receives the updated version information as the secondary response with respect to the notification request.

The device has the state information indicative of the condition of the device and the version information indicative of the version of the state information, and the version information is updated when the state information is updated, and the controller issues a notification request to the device for requesting notification of a change of the state information when the controller uses the state information of the device, and the controller receives the version information as the primary response to the notification request, and when the state information is changed in the device, the controller receives the updated version information as the secondary response with respect to the notification request and reads the state information between the primary response and the secondary response.

The secondary response from the device contains the updated version information and updated state information.

The device has operation screen information indicative of an operation screen of the device and version information indicative of a version of the operation screen information, and the controller reads the operation screen information and the version information from the device and detects a change of the operation screen information of the device by the version information.

The device comprises one or more objects and has the operation screen information indicative of an operation screen of the device and the version information indicative of a version of the updated operation screen information when the operation screen information is updated, and the controller issues the notification request to the device for requesting notification of a change of the operation screen information when the operation screen information of the device is displayed on the display screen, and receives the version information as the primary response to the notification request, and receives the updated version information as the secondary response to the notification request when the operation screen information is changed in the device.

A network control system according to second aspect of the present invention comprises: a controller equipped with a user interface; and a device to be controlled, wherein the device has a function information table indicative of a function and state of the device, component elements constituting the function information table, and element version information indicative of a version of the component elements of the function information table, and wherein the controller detects a change of information in the function information table using the element version information when the controller uses the information in the function information table of the device.

The secondary response from the device contains the updated version information and the updated object information.

The version information is a counter value which is incremented every time the information inside the device is updated.

The device has a plurality of objects which constitute the operation screen of the device, and the objects comprise invariable objects which are not varied irrespective of the device state and variable objects which are varied in accordance with the device state, and the controller reads the objects from the device, carries out caching to the invariable objects, and displays the objects on the display screen.

The device has an invariable data set comprising only the invariable objects and a variable data set comprising the variable objects, and the controller carries out caching to the invariable objects.

A network control method of the present invention is characterized by comprising the steps of: holding apparatus information in the device, said apparatus information containing apparatus configuration information which indicates device configuration information and containing operation screen information which indicates a function and condition of the device and for configuring an operation screen of the device; when said held information is changed, generating version information indicative of a change generation thereof to carry out version management, and when a notification request is issued from the controller to the device in response to the change of the apparatus information in the device, sending a response to the controller from the device in response to said notification request, wherein the response from the device contains the version information.

### BRIEF DESCRIPTION OF THE DRAWINGS

FIG. 1 is a block diagram of the device in the network control system in the first embodiment of the present invention;
FIG. 2 is a block diagram of the controller in the network control system in the first embodiment of the present invention;
FIG. 3 is a system configuration diagram showing one example of the network control system in the first embodiment;
FIG. 4 is a configuration diagram of a function information table in the first embodiment;
FIG. 5 is an illustration of the network control system in the first embodiment;
FIG. 6 is a flow chart showing processing of the controller in the first embodiment;
FIG. 7 is a protocol illustration of the network control system in the first embodiment;
FIG. 8 is a protocol illustration of the network control system in the first embodiment;
FIG. 9 is a configuration diagram of function information table in the second embodiment of the present invention;
FIG. 10 is an illustration showing the menu configuration in the second embodiment;
FIG. 11 is a protocol illustration of the network control system in the second embodiment;
FIG. 12 is a flow chart showing the controller processing in the second embodiment;
FIG. 13 is a protocol illustration of the network control system in the second embodiment;
FIG. 14 is a flow chart showing the controller processing in the second embodiment;
FIG. 15 is a configuration diagram of the function information table in the third embodiment of the present invention;
FIG. 16 is a block diagram showing a configuration example of the version information generating means in the third embodiment;
FIG. 17 is a flow chart showing the operation flow of the version information generating means in the third embodiment;
FIG. 18 is an illustration showing the changing condition of the version information in the third embodiment;
FIG. 19 is a configuration diagram of the function information table in the fourth embodiment of the present invention;
FIG. 20 is an illustration showing one example of the screen display in the fourth embodiment; and
FIG. 21 is a protocol illustration of the network control system in the fifth embodiment of the present invention.

### BEST MODE FOR CARRYING OUT THE INVENTION

Referring now to drawings, one embodiment of the network control system of the present invention will be described in detail as follows.

### (First Embodiment)

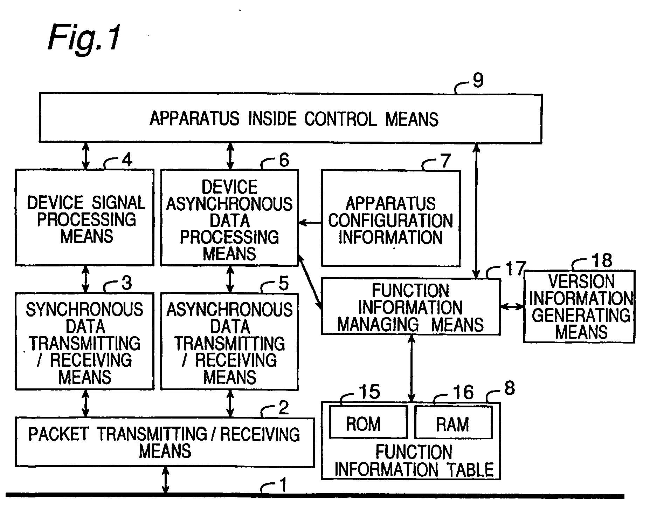

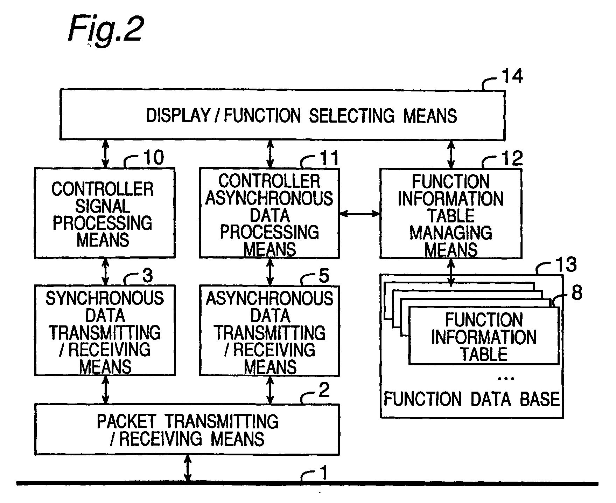

FIG. 1 shows a block diagram of the device in the network control system in the present embodiment, and FIG. 2 shows a block diagram of the controller in the network control system in the present embodiment. Referring now to FIG. 1 and FIG. 2, the configuration and operation of the network system of the present embodiment will be described.

The device referred to here in the present specification means the AV apparatus, etc. which are subjects of control, and the controller means the apparatus for controlling these subjects of control. The device and the controller may coexist in one apparatus or either one of them may exist. In addition, the apparatus corresponds to one node on the transmission line and it may be allowed to configure in such a manner as to have a plurality of nodes in one housing.

First of all, in FIG. 1, numeral 1 denotes a transmission line, numeral 2 a packet transmitting-receiving means, numeral 3 a synchronizing data transmitting-receiving means, numeral 4 a device signal processing means, numeral 5 an asynchronous data transmitting-receiving means, numeral 6 a device asynchronous data processing means, numeral 7 an apparatus configuration information, numeral 8 a function information table, numeral 9 an apparatus inside control means, numeral 15 a write inhibited memory region (ROM) with part of function information table 8 arranged, numeral 16 a write enabled memory region(RAM) with part of function information table 8 arranged, numeral 17 a function information managing means, and numeral 18 a version information generating means.

Herein, the transmission line 1 is a serial bus (1394 bus) specified by, for example, IEEE1394 standard (IEEE1394-1995 and high-order standard that is compatible with this), and can transmit and receive the synchronous data and asynchronous data by a time sharing method and others. The synchronous data is transmitted by the use of a plurality of channels divided by the time sharing method, and the band zone of each of these channels can be set individually. Now, the transmission line 1 is not always a 1394 bus, and ATM, Ethernet, infrared ray transmission, and other transmission lines may be used.

The packet transmitting-receiving means 2 provides physical and electrical interface with the transmission line 1, and at the same time carries out mediation of the right to use the bus and cycle control for synchronous transfer, etc. In addition, the packet transmitting-receiving means 2 sorts out and receives packets on the transmission line 1 in accordance with addresses and transmits packets onto the transmission line 1.

The synchronous data transmitting-receiving means 3 controls the transfer rate (data division) or adds headers when the data is transmitted. For example, when the AV protocol (IEC61883) standard of 1394 bus is used, CIP (common isochronous packet) header is added by the synchronous data transmitting-receiving means 3. Conversely, when the data is received, the synchronous data transmitting-receiving means 3 rearranges the receiving packets in a correct order and removes headers, etc.

The device signal processing means 4 receives the synchronous data from the synchronous data transmitting-receiving means 3 and carries out signal processing that fits to the device. For example, if this device is a recording-reproducing apparatus such as digital VTR, etc., the device records the synchronous data to the recording media (for example, magnetic tape). Furthermore, the device signal processing means 4 takes out the synchronous data from the recording media, broadcasting waves, etc. and transmits them to the synchronous data transmitting-receiving means 3.

The asynchronous data transmitting-receiving means 5 carries out transaction processing of the asynchronous data that conforms to the protocol of the transmission line 1, and for example, in the case of he 1394 bus, carries out read-transaction, write-transaction, lock-transaction, and other processing. Now, the asynchronous data transmitting-receiving means 5 may be configured with software. The device asynchronous data processing means 6 processes asynchronous data received from the asynchronous data transmitting-receiving means 5 and transmits the data to the appropriate component element in the device. For example, if the asynchronous data which the device asynchronous data processing means 6 receives is the control code and the user operating information, the device asynchronous data processing means 6 judges the validity, and if it is valid, the means gives an instruction to the in-apparatus control means 9 to execute the function corresponding to the control code and user operating information.

Now, the device asynchronous data processing means 6 may be intended to transmit the control code and the user operating information to the function information control means 17, and in such event, the function information control means 17 judges the validity of these, and if it is valid, the means instructs the in-apparatus control means 9 to execute functions shown by these.

When the apparatus configuration information (7) is required by the controller, the device asynchronous data processing means 6 sends out the information held in the apparatus configuration information holding section 7 to the controller via the asynchronous data transmitting-receiving means 5, etc. in conformity to the request received via the asynchronous data transmitting-receiving means 5, etc.

In addition, the device asynchronous data processing means 6 sends out the asynchronous data from the component element in the device to the asynchronous data transmitting-receiving means 5 in conformity to the instructions from the in-apparatus control means 9.

Now, the asynchronous data transmitting-receiving means 5 and the device asynchronous data processing means 6 may be configured as one means.

The apparatus configuration information (7) indicates the configuration information of the apparatus and is described in conformity to the rule shown by the configuration ROM of CSR (command and status registers) architecture specified by for example, ISO/IEC 13213:1994 standard, and when the 1394 bus is used, it has a unit directory containing the bus information which this apparatus is compatible with, such as whether it supports the bus manager or isochronous operation, or information whether it supports the AV protocol, and it also has the unique ID, which is the identifier of this apparatus, etc. In addition, in the apparatus configuration information holding section 7, the information parts of the device later discussed are described.

The function information table 8 is a table of information for configuring the operation screen of this device (operation screen information), that is, a list of information indicating the device functions and state. In this function information table 8, an object required for configuring the operation screen of the device, identifiers (ID) for identifying this object, etc. are included. This object is the component of the operation screen information, and is function menu, display parts, text data object, still picture data object, etc.

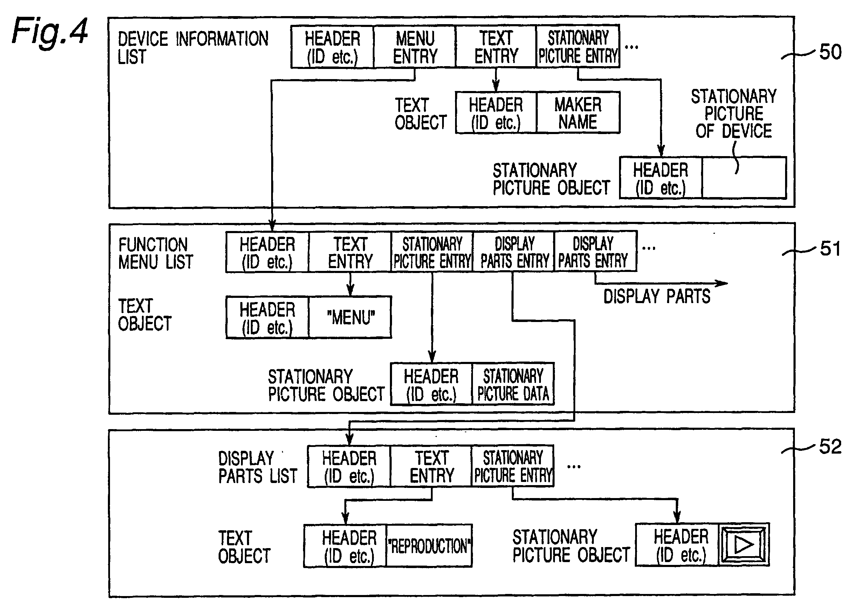

Now, each object has a hierarchical structure of a list form, and in the present specification, each data object and list itself are generically called as the object. That is, for the object information, there are data object, lists, various header information, unique information as discussed later in FIG. 4. By the way, each object does not always need to take the list structure, but may be configured by the data object only, or by the unique information and data object.

Each object has the type information that indicates the type of object, attribute information that indicates the configuration such as whether it has a child object, etc. or not, size information that indicates the size of the object, etc. at the header section in addition to the identifier (ID) for identifying each object. In addition, each object indicates the child object by the ID information in the entry mentioned in the list.

Here, display parts mean those locally displayed on the screen, such as icons, buttons, sliders, check boxes, text entries, etc., and there are still picture data such as apparatus operating buttons, etc., text data that indicates functions, etc., audio data such as effect sounds, etc., program codes including still picture data and text data, etc. And the information of function information table 8 is transferred to the controller via the device asynchronous data processing means 6, asynchronous data transmitting-receiving means 5, etc. in accordance with the request from the controller on the transmission line 1.

This function information table 8 is arranged in ROM15 and RAM16, and in ROM15, the information which is inherent to the device and is not necessary to be frequently rewritten, that is, objects such as still picture data that shows the apparatus operation buttons, etc. are stored. The ROM15 may be configured with flash ROM, and in this event, the functions themselves of the apparatus can be rewritten.

In RAM16 to which this function information table 8 is arranged, the controller on the transmission line 1 and the in-apparatus control means 9 write objects via the function information control means 17 as required. The information written in this event are contents information, operating state information, etc.

This contents information is the program information (program title, title screen, theme music, outline, information on the cast, etc.) presently broadcasted in the case of, for example, set top box (STB), and in the case of DVD, the contents information is the information of contents recorded in the DVD disk (title, title picture, theme music, outline, cast, and other information).

The operating state information means objects such as display parts, etc. that show the apparatus operating state (during reproduction, during rewinding, during record reservation) in the case of, for example, VTR. Furthermore, information required for network control such as controller identification information, etc. used for this device or date and time, channel No., etc. of record reservation may be written here.

In the present specification, the information that indicates the device condition include the contents information described herein and operating state information. In addition, for example, as in the case of VTR reproducing buttons, the condition of each display part such as still pictures when the button is pressed and the still pictures when the button is released is included.

The function information managing means 17 converts the object identifier (ID) to the address of ROM15 or RAM16. In addition, it does not simply convert the address but, for example, when the data size becomes excessively large because some display parts are rewritten and the data is unable to be written in the original address region, it assigns a new address.

Consequently, it becomes possible to read and write each of the objects from the controller on the transmission line 1, in-apparatus control means 9, or device asynchronous data processing means 6 with the identifier (ID) of the object.

When the address of each object, etc. is known, ROM15 or RAM16 address may be used to read and write the object. In addition, these may be combined to read and write display parts, etc., and objects may be read and written by the relative address in the display parts shown in the identifier (ID).

In addition, the function information managing means 17 controls the object identifier (ID), and for example, when an object is newly added, the function information managing means 17 gives the object an identifier (ID) that does not duplicate others, and conversely, when the object is deleted, the means nullifies the object identifier (ID).

The function information managing means 17 may be configured in such a manner as to submit the information of the display parts changed (object ID, or ID and object itself) to the controller when the display parts are changed, and in such event, it is not necessary to constantly monitor the objects which may cause the controller to change, and the controller processing is able to be reduced, and it becomes possible to easily take action against the object that indicates the operating state information or contents information that varies from hour to hour.

The version information generating means 18 carries out version control such as the frequency of information state change generation in the function information table 8, and is configured by the use of counters, etc., and every time the information stated in RAM16 in the function information table 8 is changed, the counter reading in the version information generating means 18 is incremented by the function information managing means 17. Now, this counter is an endless cyclic counter of finite bit length with sufficient bit length and when the maximum value is incremented, it becomes the minimum value.

Now, the counter bit length is optional but it is desirable for the device to have a sufficient bit length so that the counter value does not make a circuit at lease within the time while the controller has a control right or subscribing right of state change in order to prevent the different function information table 8 from being presented at the same counter value.

When a notification request is issued on the stage change in the device (for example, information change of the function table 8) from the controller to the device, these version information are included in the primary response and the secondary response to the notification request. It may be configured to provide a plurality (three or more) responses to one notification request, or to include the version information at that time in each response, and in such event, the device state change is definitely able to be identified and at the same time the traffic on the transmission line is able to be reduced.

By the way, in each response, the version information shown with this counter value may be included or the response may be given simultaneously with other information attached.

In addition, because, when the controller reads the information of the function information table 8, this counter value is read in by the controller together with the information on the function information table 8 and the counter value indicates the version information of the read function information table 8, the controller is able to confirm the version information and the reliability is able to be improved in identifying the device state change.

The in-apparatus control means 9 controls each component that includes the mechanism, etc. inside the device, and if the data which device asynchronous data processing means 6 receives is the control code that indicates the device action, the in-apparatus control means orders the device to act in conformity to the control code by the instructions of the device asynchronous data processing means 6.

The action of the device to the request, etc. from the controller takes place as follows. First of all, when the device is connected to the transmission line 1 or the controller is connected to the transmission line 1, the controller first reads the apparatus configuration information (7) of the device, and confirms the location of device information parts (later discussed in FIG. 4) and reads the device information parts.

The apparatus configuration information (7) may be configured to have the address information of the function information table 8 or to show the existence only. In addition, the apparatus configuration information (7) may be configured not to have the information of the function information table 8 or to have the information of the device information parts 50 only, and in such event, the controller issues a command to request device information parts 50, function menu 51, or display parts 52 in the function information table 8 and acquires the information of the function information table 8. In such event, the controller may be configured to issue the command to request part of the function information table 8, for example, display parts only, and to acquire the display parts and this ID only.

In addition, when the device receives the control code and user operating information from the controller, the device carries out processing shown with the control code and user operating information in accordance with the conditions.

Now, when for example, the control code of this object is transmitted from the controller together with the user operation "selection" for the object such as display parts, etc. for showing the device function, the asynchronous data transmitting-receiving means 5 gives an instruction to the in-apparatus control means 9 to carry out the function shown by this object.

By the way, the object referred to here is the display parts 52 or function menu 51, and it is possible to use the identifier of the display parts list, identifier of the function menu list, identifier of the data object, etc. as the object control code.

In this way, for the request of the GUI (graphical user interface) information from the controller, the device is only allowed to present the information of the function information table 8, and the device load may be able to be reduced. In addition, for each of the device functions, there is not need for the standardization organization, etc. to specify commands, and even the device to have a new function which is unable to be assumed presently can easily use this new function via the transmission line 1.

Now, the components of synchronous data transmitting-receiving means 3, device signal processing means 4, etc. may be configured optionally in conformity to the device functions or may not be included. In addition, each means may be configured either by hardware or by software.

And now, here, the device functions are specified by the user operating information and object control code, but it may be able to be configured in such a manner not to approve anything other than "selection" for the user operation, and in such event, since the device function is able to be defined only with the object control code, the device can execute the device functions only with this control code, and the packet size to be transmitted can be reduced.

And here, the control code is designated to the ID of the object, but the control code may be optionally set by the device, and for example, the control code may be configured with the number given by the kinds of the device functions and serial No. for each kind, or the unique control code used inside the device may be used, and in such event, mounting of each function inside the device is able to be facilitated.

FIG. 2 shows the block diagram of the controller inside the network control system of the present embodiment. In this figure, numeral 10 denotes the controller signal processing means, numeral 11 the controller asynchronous data processing means, numeral 12 the function information table managing means, numeral 13 the function database, and numeral 14 is the display/function selecting means. In FIG. 2, like reference characters designate like parts in FIG. 1 and the explanation thereof is omitted.

The controller signal processing means 10 receives the synchronous data from the synchronous data transmitting-receiving means 3, and carries out signal processing in conformity to this controller. For example, if this controller is the apparatus that is capable for displaying videos such as a video monitor, etc., the controller decodes the synchronous data (for example, MPEG2 stream) and displays on the screen.

The controller asynchronous data processing means 11 processes asynchronous data received from the asynchronous data transmitting-receiving means 5 and transmits to a suitable component inside the controller. In addition, the processing means 11 secures and sets the band zone channel for the synchronous data, etc.

In addition, the controller asynchronous data processing means 11 receives the information of the device on the transmission line 1 such as connection of a new device, removal of the existing device, etc. as well as contents, etc. of the device function information table 8 via the asynchronous data transmitting-receiving means 5, and transfers to the function information table managing means 12.

Furthermore, the controller asynchronous data processing means 11 sends out the asynchronous data from the component in the controller to the asynchronous data transmitting-receiving means 5 in conformity to the instruction from the display/function selecting means 14. In this event, the asynchronous data transmitting-receiving means 5 and the controller asynchronous data processing means 11 may be configured as one means.

When the controller and the device are configured in the same apparatus, since the control known by the controller or inside the apparatus is directly carried out by the in-apparatus control means 9, the function as a device inside this apparatus has a function information table 8 as a device but is not registered to the function database 13 inside the apparatus. By the way, in such event, the function information table 8 may have the location described in the apparatus configuration information (7) and at the same time may be registered to the function database 13 in advance.

When the controller and the device are configured in the same apparatus, the controller signal processing means 10 and the device signal processing means 4 as well as controller asynchronous data processing means 11 and the device asynchronous data processing means 6 may be configured as the same ones.

The function table managing means 12 controls the information of the function information table 8 received from the device on the transmission line 1, and when the means 12 receives the information from the controller asynchronous data means 11 that a new device is connected, the means 12 gives an instruction to the controller asynchronous data processing means 11 to read the information of the function information table 8 of this new device.

Then, when the information of the function information table 8 and the version information of the new device are read, the function information table 8 is registered to the function database 12 and at the same time the version information of the function information table 8 is stored in relation to the function information table 8. In this event, the place where the version information is stored in memory may store the version information together with the function information table 8 in the function database 13 or the function information table managing means 12 may store and manage the version information.

When receiving the information of the existing device on the transmission line 1 being removed, etc., the corresponding function information table 8 is deleted from the function database 13.

Here, the means 12 may be configured not to delete the function information table 8 when the existing device is removed, but to store in the storage means in the controller, and when the device is connected again, the means 12 may identify this device with the device identifier, etc., read the function information table 8 from the storage means inside the controller, and register the table to the function database 13, enabling the quick registration of the connected apparatus. The function information table 8 in the controller is not necessarily of the form exactly same as that of the function information table inside the device but is allowed only to contain the same information.

The function database 13 is arranged in the rewritable memory space and is configures the function information table 8 received from the device as a database, and by searching this database by the use of the function information table control means 12, it is possible to export objects such as the information of each device, information of each function, and ID that corresponds to these objects, the display parts for notifying the object to the user, display parts displaced when the user operates this display parts or control codes to be transmitted, etc.

The function database 13 is not always necessary to always have all the information of the function information table 8 but may hold the required section only.

The display/function selection means 14 notifies to the user of the display parts (video/audio/character information, etc.) that show the device GUI information or function GUI information, etc. on the controller screen and at the same time gives instructions for choosing the device and function in accord with the user operation as well as gives instructions to execute each function.

The display/function selection means 14 may be also able to display/reproduce the data received from the controller signal processing means 10 (for example, video and audio data) or the data received from the controller asynchronous data processing means 11.

In such event, the GUI information, etc. may be overlay-displayed on the video data received from the controller signal processing means 10 or the GUI information display screen and the video data display screen may be changed over and displayed by the instructions, etc. of the user.

In addition, the display/function selection means 14 gives instructions to the function table managing means 12 to search the function information table 8, and displays devices on the transmission line 1 and display parts (device name, function name, still pictures for display, etc.) that indicate the functions of the devices on the screen.

When the user selects the display part that indicates the device, the display/function selection means 14 reads the menu of this device form the function information table 8 and displays on the display screen.

When the user selects the display part that indicates the function, the display/function selection means 14 issues the control code to the device, which corresponds to the display parts obtained from the function information table 8 and the user operating information via the controller asynchronous data processing means 11, etc. The display/function selection means 14 receives the control code and the response of the device to the user operation information via the controller asynchronous data processing means 11, and further, if there is any instruction to change the display parts from the device using the version information in this response, checks the version information, and if the version information is updated, follows this instruction, imports the display parts to be changed from the device, displays the appropriate display parts with respect to the current device state, etc., and notifies the user.

Now, the controller is not always necessary to understand all the functions of the device, and for example, for the device with new functions which are unable to be predicted at present time, the controller can import the display parts with respect to this new function from the function information table 8, displays them on the screen, and notifies to the user.

And when the user understands the new function with these display parts and selects the function, the display/function selection means 14 of the controller refers to the function information table 8, acquires the control code corresponding to this new function, issues the control code and the user operation to the device, and allows the device to execute this new function. Consequently, by taking the above configuration, the user is able to execute new functions which are unable to be assumed at present.

Now, the components such as the synchronous data transmitting-receiving means 3, controller signal processing means 10, etc. may be or may not be configured optionally in conformity to the controller functions.

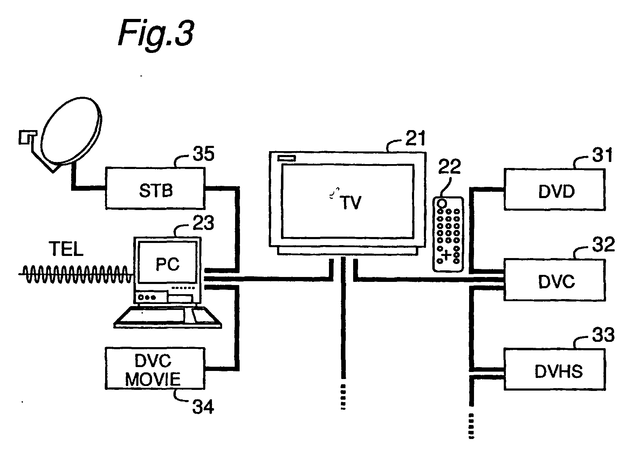

FIG. 3 shows the system configuration of the network control system of the present embodiment.

In FIG. 3, numeral 21 denotes a television TV, numeral 22 a remote controller for TV, numeral 23 a personal computer (PC), numeral 31 a recordable and reproducible DVD, numeral 32 a digital VTR (DVC) of the DV system, numeral 33 a digital VTR (DVHS) of the VHS system, numeral 34 a digital movie (DVC movie) of the DV system, numeral 35 a set top box (STB) such as CS digital broadcasting, etc., and these are generically called video/audio/information apparatus.

These video/audio/information apparatus are connected by the transmission line 1 and composes an AVC system. However, the video/audio/information apparatus is not limited to the above apparatus only but includes all the present apparatus in each of the fields of image, acoustic, and information (for example, printers, minidisks, etc.).

Now, TV 21 is an apparatus comprising the controller and the device (ground wave tuber, video monitor), and using a remote controller 22, the user give an instruction to the display/function selection means 14. PC23 is an apparatus comprising a controller and devices (modem interfaced with the telephone line, video monitors, etc.), and the user gives instructions to the display/function selection means 14 using the keyboard, mouse, etc.

Now, TV21 and PC23 are defined as the apparatus integrating devices and a controller, and of the device functions in the apparatus, functions used from other apparatus are stated on the function information table 8, and their own functions are not registered to the function database 13 of the controller section inside the apparatus. In addition, TV 21 and PC23 are defined as an apparatus comprising devices and a controller, and have a function information table 8 for each device in the apparatus, and register each function information table 8 in the apparatus to the function database 13 of the controller in the apparatus.

DVD31 and DVC movie 34 are devices that can record and reproduce AV data. DVC32 and DVHS33 are apparatus comprising devices that can record and reproduce the AV data and devices that have digital broadcasting tuner functions. And STB35 is a device that has tuner functions for receiving CS digital broadcasting.

In this embodiment, DVD31, DVC32, DVHS33, DVC movie 34, and STB35 are defined as devices, but if the environment in which other devices are operated by liquid crystal panels, etc. is realized and the user can carry out operations, such as choosing functions of other devices by the touch-sensitive panel, remote controller, etc., they may be the apparatus containing the controller and devices.

These apparatus may be configured to contain processing functions as a controller and at the same time have a remote controller for the apparatus so that displays and voices only are allowed to be displayed on the monitor by analog connections, etc., and the devices are operated by a remote controller of the apparatus while the user is watching the screen. In such event, this apparatus may be the apparatus that can contain the controller and devices.

FIG. 4 is an illustration of the function information table in the present embodiment.

In FIG. 4, numeral 50 denotes a device information part, numeral 51 a function menu that indicates component assembly parts, etc., and numeral 52 display parts. By the way, in this event, FIG. 4 shows the logical configuration of the function information table, and the physical layout is optional.

Now, each part of the device information parts 50, function menu 51, and display parts 52 comprises an object of a list form, and data objects which do not have child objects (text objects, still picture object, etc.) and list are generically called objects. That is, for the object information, there are data objects, lists, various header information, and unique information. Each object does not always have to take a list structure, and may be configured with data objects only or unique information and data objects.

At the header section, each object has an identifier (ID) for identifying each object, type information that shows the type of object, attribute information that indicates the configuration whether it has a child object or not, etc., size information that shows the size of the object, and others. Each object shows the child object by the ID information in the entry stated in the list.

For the objects such as text objects, etc. which have a small data amount, the objects themselves may be entered in the entry section in the list. The unique information of each list should be entered in the header, etc. in each list and the unique information of the data object should be entered in the entry. In addition, the unique information may be stated in either the object or the entry.

Now, the physical/logical configuration of the function information table 8 in the controller may not always be the same as the function information table 8 in the device, and at least, the information the controller presently requires should be same as that in the device.

That is, each part inside the function information table 8 does not have a physical link (relation between entry and the actual substance) as shown in FIG. 4, and may allow access from the controller object by object.

The device information part 50 is the part showing the device information, and in the device information list in the device information part 50, the category of protocol and command which this device supports, the device type with this device type coded, the version information of this device, etc. are entered as unique information. The device type may be defined to indicate the code and character string shown by, for example, the subunit type of AV/C Digital Interface Command Set (AV/C-CTS) which is discussed in 1394TA (1394 Trade Association). Consequently, with this information, the outline of this device function, for example, whether it is VTR or STB, can be identified.

It is possible for the device information part 50 to have the information of the function information table 8 itself, and the support level and size of this function information table 8, maximum transfer amount that can be sent by one asynchronous transfer of this apparatus, and others may be entered as the unique information.

Now, these pieces of information may be entered in the device information list and a route list may be prepared as a parent list of this device information list, in which such information may be entered.

In this event, it becomes possible to determine only by looking this part, for example, to what level the controller could support, how much memory space must be secured, how much transfer amount per case should be decided, etc. before the controller reads all of the function information table 8, enabling the elimination of wasteful transfer.

The device information part 50 is recorded as part of apparatus configuration information 7 from the physical viewpoint, and is configured in such a manner to enable direct reading from the controller via the transmission line 1, but the physical layout should not be limited to this. And in the apparatus configuration information 7, the identifier (ID) of the function menu that shows the main menu of this device is entered. Even the device that has no menu that shows functions is able to have the information of the device itself, and integrity between apparatus can be maintained.

The device information part 50 has the user interface information of the device, in which display parts such as the device name with this device name indicated in the character string, model name with the model No. of the products shown in the character string by the manufacturer are arranged, and each of these is one text object. By the way, in this case, no list is used for these display parts, but they may be configured by the use of the display parts list.

In the present embodiment, as a still picture object, the device information part 50 has display parts such as still picture objects showing devices such as icons, etc. of the device exist. And these text objects, still picture objects, etc. have entries inside the device information list. By the way, the device information parts 50 may have the audio object and the data showing this device such as music, etc. may be arranged.

The pseudo videos comprising a plurality of still pictures may be used in place of still picture objects, and in such event, the operation screen which is more familiar to the user is able to be configured.

This pseudo video is able to be used at the function menu 51, other display parts 52, etc. in place of the still pictures. In this event, each object is intended to have the entry in the device information list, but with respect to objects with the same objectives, the list is defined and the objects may be configured to have entries in this list. Furthermore, objects may be configured to have relevant lists in accord with the GUI classifications (display, selection, in operation, in application, errors, etc.), and in such event, displays which are easier to be understood by the user can be provided.

Next, the function menu 51 shows a menu which is an aggregate of display parts 52 that show device functions, and comprises function menu lists. The function menu list is configured with function menu lists. The function menu list is linked from the menu entry inside the device information list, and has an entry of display parts that would show the operation screen and list itself. Consequently, it is possible to trace the function menu from the device information parts 50. However, in the present embodiment, making an inquiry on the right to use for the device, the function menu can be read.

By the method of predetermining ID of the function menu list, direct access to the function menu 51 may be obtained without tracing from entries of the device information list. In this event, the display part 52 for operation screen is a display element that shows the device function and status, and is one of the components of the function information table 8, and is arranged by the use of the display parts list, and for the entry of each display part, flags that show the objectives and operation (for display, for identification, for control, etc.) of this display part or flags that show whether this function may be dynamically lost or not may be added. By the way, as shown in FIG. 4, the display part 52 that shows the function menu 51 itself may be mentioned without using the display parts list. In this way, optional display parts may be arranged without using the display parts list.

And to the display parts list that shows this display parts entry, the data objects are arranged.

Now, the entry of each display part may be directly arranged in the function menu list without using the display parts list, and in such event, flags, etc. that indicate objectives may be mentioned in the entry of each display part.

Furthermore, the function menu list 51 has the information for configuring the apparatus operation screen, and has the information such as screen size which the function information table 8 assumes, as well as background color, background patterns, etc. in the header inside, etc. as the unique information.

On the other hand, the data objects (texts, still pictures, etc.) that indicate this function menu list itself have direct entries in the function menu list.

For the data object that shows the list itself, the display parts list may be used. In addition, the information that shows these lists themselves may be distinguished from other data objects or display parts by the use of flags, etc.

And the display parts 52 are parts for displaying icons, buttons, sliders, check boxes, text entries, etc., and in these display parts lists, they have unique information such as display parts type, information required for each display part (for example, in the case of the slider, variable range, step value, initial value, etc.), etc.

In addition, this display parts list 52 has text objects, still picture objects, and other entries, and in this entry, the display parts list has the unique information such as flags that shows the kind of texts and still pictures (format), etc., and furthermore, positional information on the screen for showing the relative position to the menu screen which the device assumed.

### (Layout Information)

In addition, each display part list 52 may have the layout information that shows the mutual relation of display parts with respect to display parts which are in close relation from the functional and screen design viewpoints as relational information that has the same information (for example, same value). That is, because when the screen size assumed by the device function information table 8 is greater than the screen size of the controller, the controller is unable to display the display screen shown in this function table 8, the layout of the display parts in the function information table 8 is rearranged by the controller and are displayed by dividing into a plurality of pages.

In this event, a plurality of display parts in close relationship may have the relational information with the same information (value) and belong to one display set to be arranged close to each other. And by this relational information, the display parts that belong to the same display set are arranged close to one another in one page.

Now, the display parts with close relation referred to here are, for example, VTR reproduction button and stop button or TV channel UP button and DOWN button, which are used in pair, ten-key pad that indicates TV channels and TV aspect switching key (4 to 3, 16 to 9, letter box, full screen display, etc.) which show similar functions, or those which are easier for the user to understand when they are arranged close to each other from the viewpoint of screen design. Which display parts should be arranged close to each other in this relational information is decided uniquely by the device manufacturer. By the way, this relational information may be mentioned in the header as the unique information. In addition, all the display parts should not always have this relational information, which should be added only to display parts which belong to any display sets to be arranged close to each other.

In the case of new functions which are unable to be assumed presently, by arranging the still picture, etc. that shows this new function as a display part, the data of this new function is transmitted to the controller, and the information on this new function is able to be presented to the user.

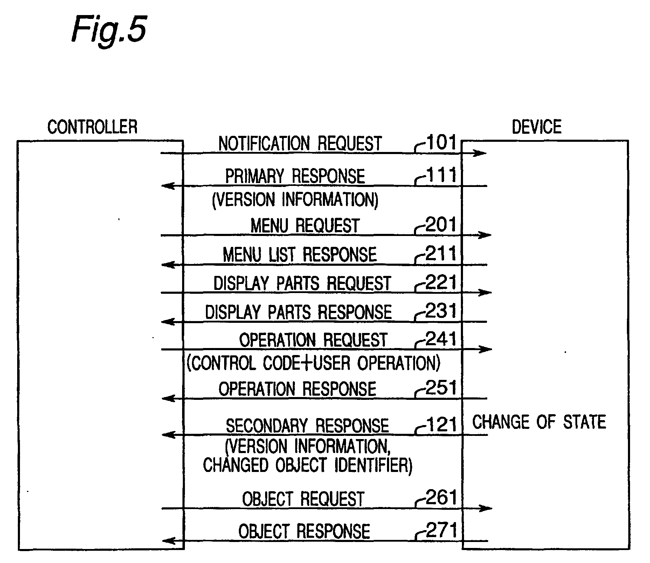

FIG. 5 is an illustration of the network control system in the first embodiment, and using this, the control operation of the controller and the device will be explained.

First of all, when the device is connected to the transmission line 1, the controller on this transmission line 1 recognizes the new device by bus resetting, etc. if it is the 1394 bus, and by the instructions of the function information table control means 12, reads the device information part 50 from the new device through the transmission line 1, reads and registers this device information part 50 to the function database 13 of the controller as part of the function information table 8 of this device.

Now, the physical/logical configuration of the function information table 8 in the controller is not always same as that of the function information table 8 inside the device, but at least, the information which the controller needs at this present moment should be same as that in the device.

That is, each part in the function table 8 does not have a physical link (relation between entry and the actual substance) as shown in FIG. 4, and may allow access from the controller object by object.

Now, each function information table 8 is identified by the unique ID, etc. original to each device and has a list structure to have an entry for each device. The information of the function information table 8 may be all read in a lump or part of the function information table 8 only may be read. Further, the information may be read object by object or list by list.

For example, the identifiers (IDs), etc. of the device information list and function menu list are decided in advance and the controller may make direct access by the use of these IDs, or the controller communicates with the device and the controller acquires these Ids, and make access to the information. Furthermore, the function menu ID may be included in the primary response from the device side to the notification request (later discussed) from he controller.

In the controller, each display part is identified by IDs combining the unique ID original to the device with IDs of display parts which the device gave. It may be configured for the controller to give ID of each display part newly and to have a conversion table of this new ID with the (unique ID of the device + ID given by the device). And in this function information table 8, the display parts with IDs are included.

The display/function selection means 14 refers the function information table 8 (or part of the function information table 8) in the function database 13 through the function information table managing means 12.

When the display/function selection means 14 displays a table to devices connected to this controller, the display/function selection means 14 uses the function information table control means 12 to read the data objects (text objects, still picture objects, etc.) that belong to the device information parts 50 from the function information table of all the devices registered to the function database 13, and displays these on the screen.

There is no need to display all the data objects of the device information parts 50 on the screen, but to display properly sorted out data objects.

When there is any audio object in the device information parts 50, it is not used when the device table is displayed but for example, when the new device is connected with the device table displayed already, the still picture object of this new device is displayed and at the same time, if there is an audio object, the audio object is reproduced.

Then, when the user selects, for example, the device still picture object by the pointing function (for example, cross-shaped key), etc. of the remote controller, the display/function selection means 14 requests the main menu to the function table managing means 12, and the function information table managing means 12 reads the function menu 51 that shows the main menu of this device and the display parts that belong to this function menu 51, and stores in the function information table 8 in the controller.

In such event, first of all, the controller transmits the notification request 101 shown in FIG. 5 to the device as a command and declares that the controller grasps the device condition and controls its action. As a response to this, the device returns the primary response 111, and in this primary response 111, the version information that indicates the initial value, generation No. "1," etc. of the function information table that indicates the device functions are contained.

In this event, the version information is expressed by the function menu 51, the main of the version information, and the generation No., etc. that indicate display part 52 under this or function menu 51, etc., and is expressed by the counter value, etc. which are incremented every time the information inside the device is updated. By the way, the version information may be configured in such a manner that it indicates the version of the function table including the device information parts 50 as well as the function menu 51 and display part 52.

For the primary response 111, the identifier (ID) of function menu 51, which becomes the main inside the device may be returned, and in such event, the device is enabled to change the main menu easily by itself.

Then, in order to acquire the contents of the function menu 51, the function information table managing means 12 inside the controller transmits the menu request 201 to the device, and the device returns the list (function menu list) that shows the identifier (ID) of display part, etc. contained in the function menu 51. If there is objects composed using the list in the function menu 51, the identifier of the relevant object list contained in the function menu 51 is returned.

The function information table managing means 12 sends a display parts request 221 with the identifier of the display parts attached in order to acquire the entity of each display part and acquires each display part at the display part response, which is the response to this request. In this event, the display parts may read those that belong to the intended function menu 51 in a lump or one by one. In addition, as a response to the menu request 201, all the display parts that belong to the function menu 51 may be transmitted. When the display parts are read, the display parts list 52 and the data object (text object, still picture object, etc.) may be accessed separately and read.

In this way, the information of the device function information table 8 is read by the function information table managing means 12.

Consequently, the display/function selection means 14 reads the display parts 52 from the function information list of each function mentioned in the function menu list using the function information table managing means 12, and displays the display parts corresponding to each function on the screen. By this, on the screen, it becomes possible to display the display parts that show all the functions of this device.

In this case, too, each display part is identified by the unique ID of the device and ID of each display part.

Next, when the user selects the display parts that show, for example, reproducing functions of the device by the pointing functions, etc. of the remote controller, the display/function selection means 14 transmits the identifier (ID) of the display parts 52 designated by the device as the control code together with the user operation information (for example, "selection"). That is, even when with the cross-shaped keys that indicates the top and bottom and right and left of the remote controller, the cursor is moved on this display part and the selector button is pressed and then released, ID of this display part 52 (control code) and the user operating information ("select") are transmitted to the device as the operation request 241.

It is also possible to send further subtle user operating information to the device, and when "press," "release," "press twice," and other operations are carried out to the display parts 52 by the remote controller and the pointing device operation, these operation information is able to be transmitted to the device.

The user operating information may be coded and may be sent together with ID of the display part 52 or each information may be sent as one command (the operand is control code such as ID, etc. of the display part 52).

When the selection operation only is allowed to the display part 52, etc., it may be configured to transmit the control code (identifier: ID) of the display part only to the device, and processing can be simplified and at the same time, the traffic of the transmission line 1 can be reduced.

As responses to the operation request 241, in the operation response 251, responses such as whether the operation request 241 is received, rejected, not supported by the device or not are returned.

Then, when the state in the device changes and the objects (function menu list, display parts list, data object) in the device change, the device returns the secondary response 121 to the notification request 102. In this secondary response 121, the version information and identifiers (ID) of objects changed are included. Though in this case, it is stated that identifiers of objects changed are included, it may be stated that when a plurality of display parts 52 included in the function menu change, identifiers of the function menu are returned. Furthermore, it may also be stated that identifiers of objects changed are returned as the secondary response in the same manner when objects that belong to the device information parts 50 change.

And the function information table managing means 12 detects that objects in the device have changed by receiving this secondary response, and using the identifier of the changed object, requests the changed object by the object request 261, and as the response to this, in the object response 271, this changed object is acquired. In this case, the process was generalized for explanation, but for example, if the changed object is the function menu 51, the menu request is carried out as this object request 261, and for the object response, the menu list response is obtained, the function menu list 51 is acquired, and the controller checks the display parts list changed in the function menu list, and requests display parts to the changed display parts list, and acquires the display parts 52 by the display parts response.

This secondary response is used, for example, when the device changes the operation screen display to the display that indicates "during rewinding" when the tape reaches the tail end during reproducing the VTR and rewinding begins automatically, etc. This may be used for changes of the still picture on the operation screen (from convex display to concave display) for the operations such as pressing and releasing of the button on the operation screen.

After the function information table 8 in the controller is updated, the function information table managing means 12 instructs the display/function selection means 14 to update the screen display, and the display/function selection means 14 updates the screen.

In this case, it was stated that the identifier of the changed object is included in the secondary response 121, but when the object entity, for example, the display part is changed, the display parts list and the data object that belongs to this list may be transmitted as the secondary response, and in such event, the display parts request and the display parts response are no longer needed and processing is able to be simplified.

It is also possible to allow the operation response 251 to have the information that indicates the state change in the device that is generated directly for the operation request 241, and in such event, the secondary response 121 may be transmitted when changes other than this state change directly generated. For example, for changes of the still picture on the operation screen (from convex display to concave display) for the operations such as pressing and releasing of the button on the operation screen, etc., a quick response is able to be obtained, and the number of frequencies to carry out the notification request can be reduced, and the traffic of the transmission line 1 can be reduced.

In addition to the requests/responses, etc. shown in the present embodiment, communication may be carried out between the controller and the device, and though it is not illustrated, for example, it may be configured to return the recognition signal for confirming that the other party has received each request and response.

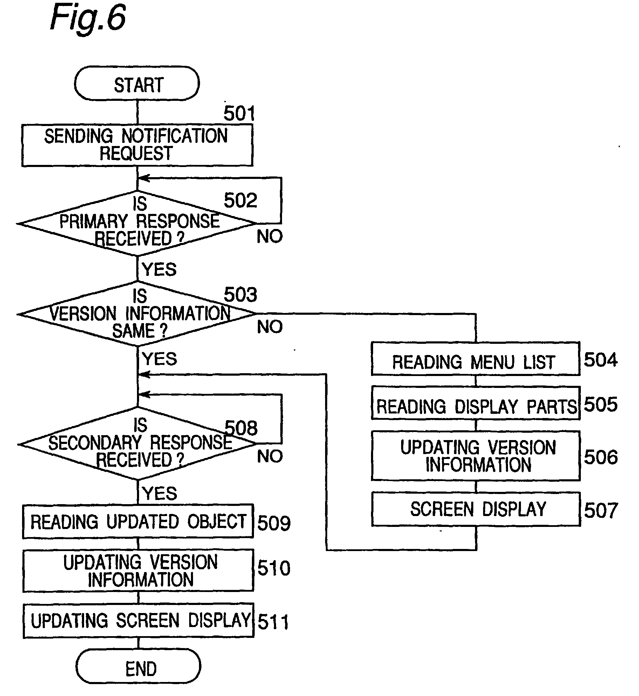

FIG. 6 is a flow chart that shows the controller processing in the first embodiment. In this case, the controller processing of the protocol shown in FIG. 5 is indicated. However, in this case, operation request 241 and operation response 251 are omitted.

In processing 501, the controller sends the notification request to the device, and in processing 502, the controller waits for the response. In processing 503, the controller confirms the version information, and if the version information is updated, the controller reads the objects required in processing 504, 504, and updates the version information in processing 506, and displays the version information on the screen in processing 507. By the way, when the device power supply is turned on for the first time, when the device is connected to the transmission line 1 or when the controller uses the menu information of this device for the firs time, it must be configured to enable denial judgment in processing 503, and the processing indicated from processing 504 to 507 are carried out. Consequently, it can be prevented the case in which the version information happens to coincide with, and the correct version is able to be definitely obtained. When the version information is not updated, since the information on the device function information table coincides with the information on the controller function information table, reading of the object, updating of the screen, etc. will not take place.

Thereafter, in processing 508, the controller waits the secondary response and because receiving the secondary response when the controller receives the secondary response means that the version information has been changed, the controller reads the object changed in processing 509 using the identifier of the updated object included in the secondary response, updates the version information in the controller in processing 510, and updates the screen display in processing 511.

And by repeating this processing, the controller is able to constantly grasp the device condition.

In addition, because it is able to notify the controller of the change of the device state information by the version information, the device is able to change its own state information at any optional time. That is, even during the period from when the controller detects the change of the device state information to when the controller imports this state information, the device is allowed to change its own state information, and the device does not need to use the buffer for temporarily storing the change of the state information, not only simplifying the processing but also reducing the storage region.

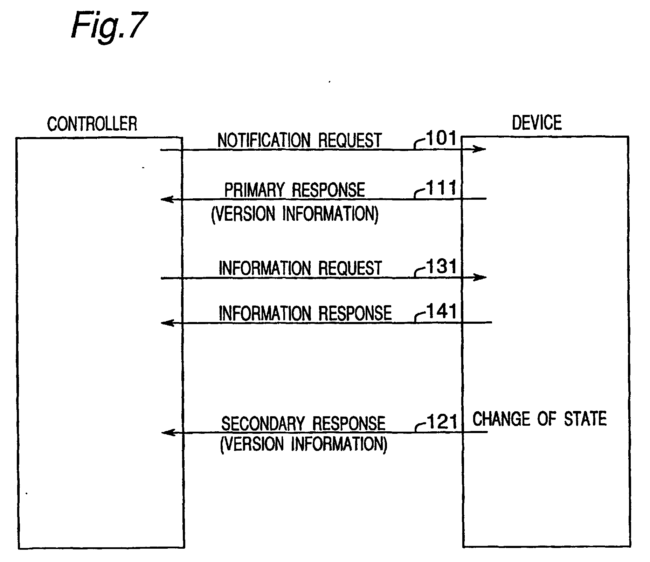

The present invention is not applied only when the function information table that indicates the device function is updated but as shown in FIG. 7, after the primary response 111 is acquired, the controller sends the information request 131 for the optional information of the device, and receives the information response 141 from the device, and thereby the controller is able to constantly grasp the information. For example, this is effective to grasp the condition of the monitoring system for monitoring intruders or the device which operates in a remote place by the change of images.

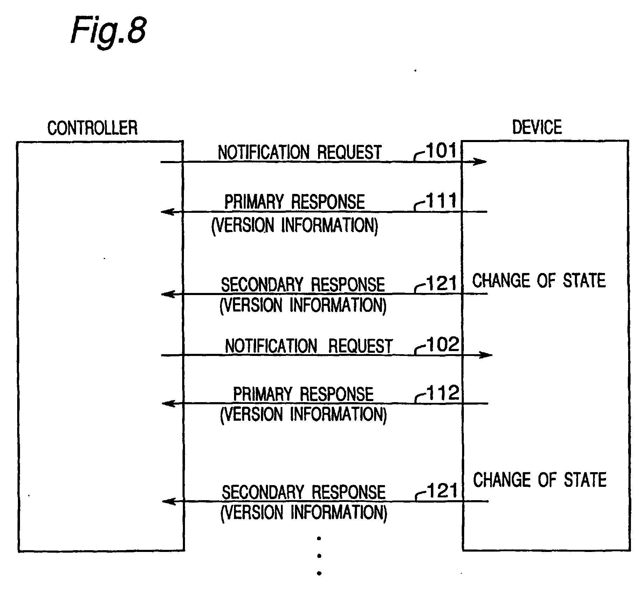

FIG. 8 is an example when this protocol is repeated used, and as shown in FIG. 8, the controller is able to constantly grasp the device condition by successively repeating a series of procedures by the configuration in which the controller automatically transmits the notification request 102 when the controller receives the secondary response 121.

The version information is defined as the version of the device state information, but each of the menus possesses the version information that indicates the version of each menu, and the same effects are able to be obtained.

As described above, according to the present embodiment, the device possesses the state information that indicates the device state and the version information that indicates the version of the state information, and when the state information is updated, the relevant version information is updated, and by reading the state information and the version information from the device, the controller is able to easily detect the device state change and at the same time is able to definitely identify the state information in the device without trouble even when the state change inside the device occurs due to control of other controllers or spontaneous change inside the device.

The device has the state information that indicates the device condition and version information that indicates the version of the state information, and the version information is updated when the state information is updated, and the controller issues the notification request to the device for requesting the notification on the change if any state information is changed, and the controller receives the version information as the primary response to the notification request, and when the state information is changed inside the device, the controller receives the updated version information, and thereby the controller is no longer necessary to constantly monitor the device by polling, etc., making it possible to simplify the controller processing, and at the same time, since the device that has caused the state change spontaneously notifies the controller of the state change, the controller is able to quickly detect the state change inside the device.

It becomes possible to transmit the updated state information only by including the updated version information and updated state information (identifier) in the secondary response from the device, and the traffic of the transmission line can be reduced. Furthermore, by including the updated state information (state information itself), the controller is no longer necessary to read the changed state information after the controller detects the state change, processing of the controller is able to be simplified, and at the same time, on the device side, a trouble for enabling the controller to read the state information is eliminated, and the traffic of the transmission line is able to be further reduced.

The device has the operation screen information that indicates the device operation screen and the version information that indicates the version of the operation screen information, and the controller reads the operation screen information and the version information from the device, and detects the change of the device operation screen information by the version information, thereby making it possible for the controller to easily detect changes of the device state due to instructions from other controllers or spontaneous changes inside the device, and at the same time enabling the controller to easily and definitely identify the operation information that correctly reflects the device condition.

The device comprises one or more and a plurality of objects and has the operation screen information that indicates the device operation screen and the version information that indicates the version of the operation screen information, and when the controller displays the operation screen information of the device on the display screen, the controller issues the notification request to the device for requesting the notification on the change if any state information is changed, and the controller receives the version information as the primary response to the notification request, and when the state information is changed inside the device, the controller receives the updated version information, and thereby the controller is no longer necessary to constantly monitor the device by polling, etc., making it possible to simplify the controller processing, and at the same time, since the device that has caused the state change spontaneously notifies the controller of the state change, the controller is able to quickly detect the state change inside the device. Consequently, it is able to quickly present the latest operation information to the user and provide a user-friendly interface to the user.

It becomes easy to transmit the updated object information only by including the updated version information and updated object information (identifier) in the secondary response from the device, and the traffic of the transmission line can be reduced. Furthermore, since by including the updated object information (object itself), the controller is no longer necessary to read the changed object after the controller detects the operation screen information change, processing of the controller is able to be simplified, and at the same time, on the device side, a trouble for enabling the controller to read the state information is eliminated, and the traffic of the transmission line is able to be further reduced. Consequently, it is able to quickly present the screen update to the user and the improved operability and visibility of the operation screen are achieved.

Because the version information is the counter value that is incremented every time the information inside the device is updated, the reliable version information is able to be created by simple configuration and simple processing.

### (Second Embodiment)

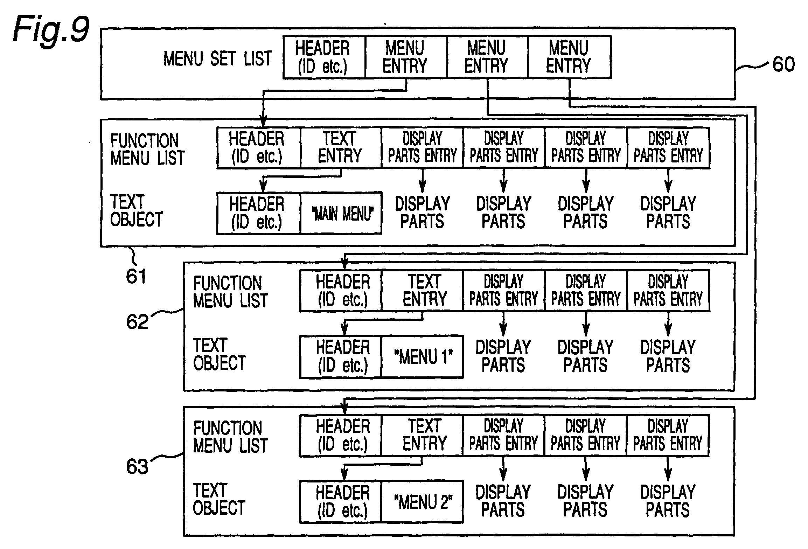

Referring now to FIG. 9 through FIG. 14, the second embodiment of the present invention will be described. In this case, the configurations of the device and the controller are same as those of the first embodiment shown in FIG. 1 and FIG. 2 and their explanation will be omitted.

FIG. 9 shows the configuration of the function information table 8 of the present embodiment, and since the configuration of the device information parts 50 is the same as that of the first embodiment shown in FIG. 4, it is not illustrated in FIG. 9. Numeral 60 denotes a menu set indicating a set of function menus in the device, numeral 61 the main function menu that indicates the main menu of the device, numeral 62 the first sub function menu that indicates the first submenu of the device, and numeral 63 the second sub function menu that indicates the second submenu of the device. In this event, the menu set list 60 has identifiers of function menus that show the main menu 61 and each sub menu 62, 63, and each function menu 61, 62, 63 are able to be detected by tracing the link from the menu set list 60.

Now, each part comprises objects of the list form, and the data object which does not have child object (text object, still picture object, etc.) and the list are generically called the object. That is, as the object information, there are data object, list, various header information, and unique information. By the way, each object is not always necessary to take a list structure, but may be configured only by the data object, or by the unique information and the data object, which is the same as in the case of the first embodiment.

Each object has an identifier (ID) that identifies each object, type information that indicates the type of the object, attribute information that indicates the configuration such as whether it has a child object or not, etc., size information that indicates the size of the object, etc. in the header section. In addition, each object indicates the child object by the ID information in the entry mentioned in the list.

The objects such as text objects, etc. which have a small data amount may have the object itself stated in the entry section in the list. In addition, the unique information of each list should be stated in the header, etc. in each list, and the unique information of the data object should be stated in the entry. Furthermore, the unique information may be stated either in the object or in the entry.

Now, the identifier (ID) of the menu set list in the menu set 60 is contained in the device information parts list 50.

The device information list 50 may contain the identifier of the function menu that indicates the main menu 61, and in such event, each of sub menus 62, 63 is able to be detected by tracing the link from the main menu.

Next, the menu set 60 collects function menus inside the device, and in the header inside the menu set list in the menu set 60, the number and the size of the menus existing in this device are stated as unique information.

The menu set list 60 has the entry of all the function menus that belong to the menu set. In this entry, for example, the identifier of each function menu is entered, and flags that show the type of relevant function menus are also entered. Now, for the type of function menus, there are generally a main menu and sub menu. For this sub menu, for example, there are an operation menu that indicates part of functions inside the device, help menu that indicates the usage, contents menu that collects contents information only inside the device, an editing menu for carrying out editing operation, setting menu for setting the device, etc.

In this embodiment, each menu is identified by the use of a flag, but it may be configured to distinguish each menu by stating the main menu only in the top entry of the menu set list or stating in the apparatus configuration information 7, etc. or to acquire information on each sub menu by tracing successively from the function menu list of the main menu. It is also possible to enable direct access to each function menu list by the method such as predetermining ID of each function menu list without tracing from the entry of menu set.

Next, the main function menu 61 shows the main menu of the device, which comprises function menu lists, which are sets of display parts (52) indicating the main function of the device. The function menu list is able to be linked from the entry inside the device information list 50, and has the operation screen and the entry of display parts 52 for indicting the list itself. The configuration of the display parts list 52 is same as that in the first embodiment shown in FIG. 4.

And the main function list 61 has the information for configuring the operation screen, and has the screen size assumed by the main menu, and the information on the background color and background pattern, etc. in the header, etc. as unique information. That is, in FIG. 9, it is stated as the text object, but the data object (text, still picture, etc.) of the display parts that indicate the function menu list itself in the main function menu 61 has an direct entry in the function menu list.

For the data object that shows the list itself, the display parts list may be used. The information that indicates these lists themselves may be distinguished from other data objects and display parts 52 using flags, etc.

In the function menu that indicates the main function menu 61, display parts that show the link to each sub menu are included. This display part is a still picture or text data, and shows the sub menu of the reference, and when the user chooses this display part on the controller, the reference sub-menu is displayed on the screen.

Similarly, the first sub function menu 62 indicates the first sub menu of the device and the set of display parts 52 that indicate the sub functions of the device, and comprises the function menu list. The function menu list is linked from the entry in the device information list 50, and has entries for the operation screen and of display parts 52 for indicting the list itself. The configuration of the display parts list 52 is the same as that of the first embodiment shown in FIG. 4.

The function menu list in the sub function menu 62 has the information for configuring the operation screen of the apparatus, and has the screen size assumed by the sub menu and information such as background colors, background patterns, etc. in the header as unique information.

In FIG. 9, though it is stated as text object, the data object (text, still picture, etc.) of the display parts that indicate the function menu list itself in the first sub function menu 62 has a direct entry to the function menu list.

By the way, for the data object that indicates the list itself, the display parts list may be used. In addition, the information that shows these list themselves may be distinguished from other data objects and display parts 52 using flags, etc.

And inside the function menu that indicates the sub function menu 62, display parts that indicate the main menu of the returning place or link to the sub menu are contained. This display part is a still picture or text data, and shows the menu of the returning place, and when the user chooses this display part on the controller, the menu of the returning place is displayed on the screen and the focus is moved. When the menu is displayed together with the sub menu on the controller screen, the focus only may be simply moved.

The second function menu 63 is the same as the first sub function menu 62.

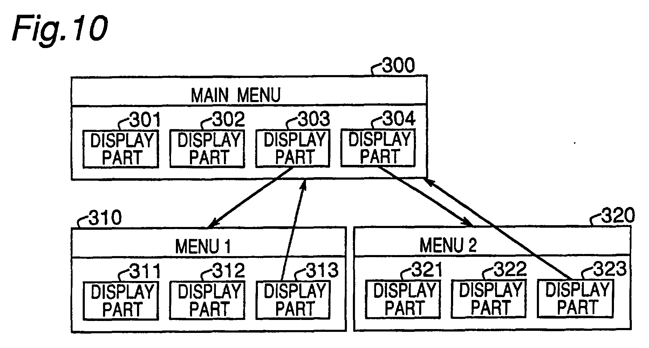

FIG. 10 shows a configuration example of the menu of the present embodiment. In this case, the device illustrates the case with three menus. Menu 300 is the main menu of this device, while menu 310 and menu 320 are sub menus linked from the menu 300 and indicate each of the sub function menus 62 and 63. That is, if the user selects the display part 303 in the menu 300 when the menu 300 is displayed on the controller display screen, the first sub menu 310 is displayed on the controller screen, and similarly, when the display part 304 is chosen, the second sub menu 320 is displayed. If the display part 313 is chosen when the menu 310 is displayed, the main menu 300 is displayed.

Display parts 311, 312,321, 32 show the functions or states of this device, and for example, if the menu 310 indicates the function or the state of the VTR deck section, the display part 311 is a reproduction button, and the display part 312 a stop button, etc. If the menu 320 shows the function or state of the VTR tuner section, the display part 321 is a channel UP button and the display part 322 a channel DOWN button, etc. Furthermore, for example, when the menu 300 indicates VTR, the display part 301 is a voice change-over button and the display part 302 is an input change-over button, etc.

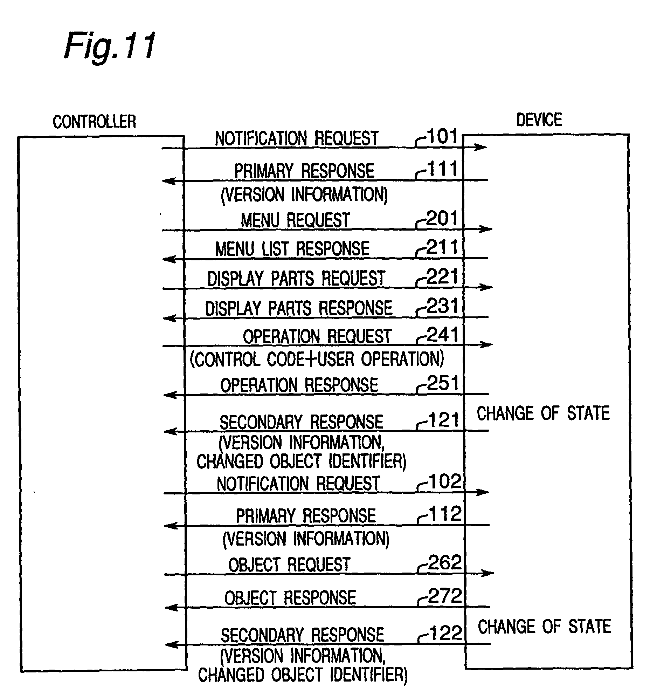

FIG. 11 is an illustration of the network control system of the second embodiment, and using this figure, control action of the controller and the device will be explained. The main points that differ from the control action of the first embodiment shown in FIG. 5 are that in the notification request 101, the information on the notification range that shows the range the controller hopes to bring the information in coincidence with the device is included and when the secondary response 121 is received, a new notification request and the primary response are transmitted and received in succession.

First of all, when the device is connected to the transmission line 1, the controller on this transmission line 1 recognizes the new device by bus resetting, etc. reads the device information part 50 from the new device through the transmission line 1, reads and registers this device information part 50 to the function information table 8 of the function database 13 of the controller.

Now, the physical/logical configuration of the function information table 8 in the controller is not always same as that of the function information table 8 inside the device, but at least, the information which the controller needs at this present moment should be same as that in the device.

That is, each part in the function table 8 does not have a physical link (relation between entry and the actual substance) as shown in FIG. 9, and may allow access from the controller object by object.

The display/function selection means 14 refers the function information table 8 or part of the function information table 8 in the function database 13 through the function information table managing means 12.

When the display/function selection means 14 displays a table to devices connected to this controller, the display/function selection means 14 uses the function information table managing means 12 to read the data objects (text objects, still picture objects, etc.) that belong to the device information parts 50 from the function information table of all the devices registered to the function database 13, and displays these on the screen.

Then, when the user selects, for example, the device still picture object (still picture that belongs to the device information part 50) by the pointing function (for example, crosshair key), etc. of the remote controller, the display/function selection means 14 requests the main menu to the function table managing means 12, and the function information table managing means 12 reads the function menu 61 that shows the main menu of this device and the display parts that belong to this function menu 61, and stores in the function information table 8 in the controller.

In such event, first of all, the controller transmits the notification request 101 shown in FIG. 11 to the device as a command. As a response to this, the device returns the primary response 111, and in this primary response 111, the version information of the function information table 8 that indicates the function of the device is contained.

In addition, in this notification request 101, the information on the notification range that indicates the range the controller hopes to bring the information to coincide with the device is included, and as the response, he device returns the primary response 111, and in this primary response 111, the version information corresponding to the notification range is included. This notification is specified by the framework such as device unit such as the whole function information table or component unit (for example, function menu), etc. or menu unit, etc. For example, when the device unit of the whole function information table is specified as the notification range, the device notifies to the controller of the change as the secondary response to the notification request when the object either in menu 300 or menu 310 or menu 320 is changed.

On the other hand, when the information that indicates the menu unit and the main menu is chosen, the device notifies the controller of the change only when the object in the menu 300 located in the main menu inside device, and does not notify the controller of the change when the object in the sub menu 310 or sub menu 320 is changed.

When the menu unit and menu 310 (specified with ID of the function menu) are specified for the notification range, the device notifies the controller of the change of the object in the menu 310 only. That is, when the information change is requested to the main menu of the device, for the information of this notification range, the information indicating the menu unit and the main menu (not limited to the identification of the function menu, which is the main menu) are transmitted.

If the controller specifies a specific function menu as the notification range, the device notifies the identifier (ID) of the specific function menu to the controller as the secondary response when the object that belongs to the specific function menu (list and data object) is changed. For example, when the controller simultaneously displays menus 300, 310, 320 on the screen or caches all the device information, the notification range is designated to the device unit of the whole function information table and when it is displayed menu by menu, the notification range is designated to menu unit (component unit).

In this case, the notification range is explained as the information which controller displays, but what is specified as the notification range should not always be limited to what the controller is displayed but may be the unit of the information which the controller possesses, and in such event, by controller's caching the information outside the display range, the menu is able to be quickly changed over on the display screen. Furthermore, the notification range should not be limited to the display element but may be applied to optional information such as device state information etc. indicated in the bit string.

Now, the version information is updated (incremented) when the information inside the device is changed. Consequently, the information other than the notification range is changed, the version information of the function information table is updated. The version information is also updated when the component set parts, etc., which are sets of function menu in the notification range and display parts 52 and display parts 52 located below are changed. The version information may be configured in such a manner as to indicate the version of the whole device including the device information and function menu 51 and the display parts 52 located below.

When the whole function list is indicated as the notification range, the identifier (ID) of the main function menu 61, which is the main inside the device, may be returned as the primary response 111, and in such event, the device is enable to easily change its main menu. Furthermore, for example, it may be configured to return the identifier (ID) of the main function menu 61 as the primary response when the controller specifies the information that indicates the menu unit and main menu and sends the notification request to the device.

It is also possible to return the menu set list of the menu set 60 as the primary response 111, and in such event, the controller recognizes the meaning of each function menu (main menu, sub menu, help menu) by the flags mentioned in the menu set list, and specifies the desired function menu by the identifier of the function menu stated in the menu set list. In this case, for example, the first entry of the menu list may be specified as the main menu and the main menu may be judged in order of entries to each function menu.

When the menu to be displayed is changed by operations, etc. of the user, the controller is able to make the notification request of the change in the device information to the menu newly displayed by specifying the new notification range when the notification request is issued, and the controller is able to acquire the state change information with a simple configuration and efficiently (that is, with small storage area). This is not limited to the menu but applicable in the same manner to each component.

Next, in order to acquire the contents of the function menu that corresponds to the notification range, the function information table managing means 12 in the controller transmits the menu request 201 to the device, and the device returns the list of identifiers (ID) of the display parts that belong to the function menu 1 as the menu list response 211, which is the response to this request.

The function information table managing means 12 sends a display parts request 221 to the device with the identifier of the display parts attached in order to acquire the entity of each display part and acquires each display part at the display part response 231, which is the response to this request. In this event, the display parts may read those that belong to the intended function menu in a lump or one by one. In addition, as a response to the menu request 201, all the display parts that belong to the function menu may be transmitted. When the display parts are read, the display parts list 52 and the data object (text object, still picture object, etc.) may be accessed separately and read.

In this way, the information in the notification range of the device function information table 8 is read by the function information table managing means 12.

Consequently, the display/function selection means 14 reads the display parts from the function information list of each function mentioned in the function menu list from the device function information table 8 using the function information table managing means 12, and displays the display parts corresponding to each function on the screen. By this, on the screen, it becomes possible to display the display parts that show all the functions of this device.

In this case, the identification of each display part is carried out by the unique ID of the device and ID of each display parts.

Next, when the user selects the display parts 52 that show, for example, reproducing functions of the device by the pointing functions, etc. of the remote controller, the display/function selection means 14 transmits to the device the identifier (ID) of the display parts 52 designated by the device as the control code together with the user operation information (for example, "selection"). That is, even when with the crosshair that indicates the top and bottom and right and left of the remote controller, the cursor is moved on this display part and the selector button is pressed and then released, ID of this display part 52 (control code) and the user operating information ("selection") are transmitted to the device as the operation request 241.

As responses to the operation request, in the operation response 251, responses such as whether the operation request 241 is received, rejected, not supported by the device or not are returned.

Then, when the state in the device changes and the objects (function menu list, display parts list, data object) in the device change, the device returns the secondary response 121 to the notification request 102. In this secondary response 121, the incremented version information and identifiers (ID) of objects changed are included.

Though in this case, it is stated that identifiers of objects changed are included, it may be stated that when a plurality of display parts 52 included in the function menu change, identifiers of the function menu are returned. Furthermore, it may also be stated that identifiers of objects changed are returned as the secondary response in the same manner when objects that belong to the device information parts 50 change.

And the function information table managing means 12 detects that objects in the device have changed by receiving this secondary response, and using the identifier of the changed object, requests the changed object, and before requesting the changed object, the secondary notification request 102 is sent to the device. And for this response, the primary response 112 is obtained. In this primary response 112, the version information of the device is included.

First of all, when the version information contained in the primary response 112 of the notification request 102 is the same at the version information of the secondary response 121, since the device state is not changed between the secondary response 121 and the notification request 102, the difference between the controller information and the device information is the object notified by the secondary response 121. Consequently, this object is requested by the object request 262 and the object changed by the object response 272, which is the response to this, is obtained. For example, if the changed object is the function menu the identifier of the function menu list is notified in the secondary response 121), the menu request is carried out as this object request, and for the object response, the menu list response is obtained, the function menu list is acquired, and the controller checks the display parts list changed in the function menu list, and requests display parts to the changed display parts list, and acquires the data object of the display parts 52 by the display parts response.

On the other hand, when the version information of the primary response 112 differs from the version information of the secondary response 121, the difference between the controller information and the device information is not definite. That is, because the version information incremented every time the information inside the device changes differs, the information in the device is changed between the secondary response 121 and the primary response 112. Consequently, in this event, the controller first reads the list (function menu list, display parts list, etc.) only of the objects in the notification range held by the controller in the object request 262. And the controller judges whether the identifier (ID) of each object stated in this list coincides with the identifier (ID) of the objects in the information held in the controller, and sends the objects with difference only to the device as the object request (not illustrated in FIG. 11) and obtains them in the object response (not illustrated in FIG. 11).

Consequently, it becomes possible to bring the information the controller holds to coincide with the information of the device even when the data object only is changed or the list itself is changed. Consequently, it is no longer necessary to use the information of the updated object acquired in the secondary response 121. Thereafter, the controller updates the version information of the function information table 8 in the controller.

In this way, constantly making the notification request before the controller acquires the device information, the time the controller does not make the notification request to the device can be reduced and the device change can be quickly and definitely acquired.

And after the function information table 8 in the controller is updated, the function table managing means 12 instructs the display/function selection means 14 to update the screen display, and the display/function selection means 14 updates the screen.

In addition to the requests/responses, etc. shown in the present embodiment, communication maybe carried out between the controller and the device, and though it is not illustrated, for example, it may be configured to return the recognition signal for confirming that the other party has received each request and response.

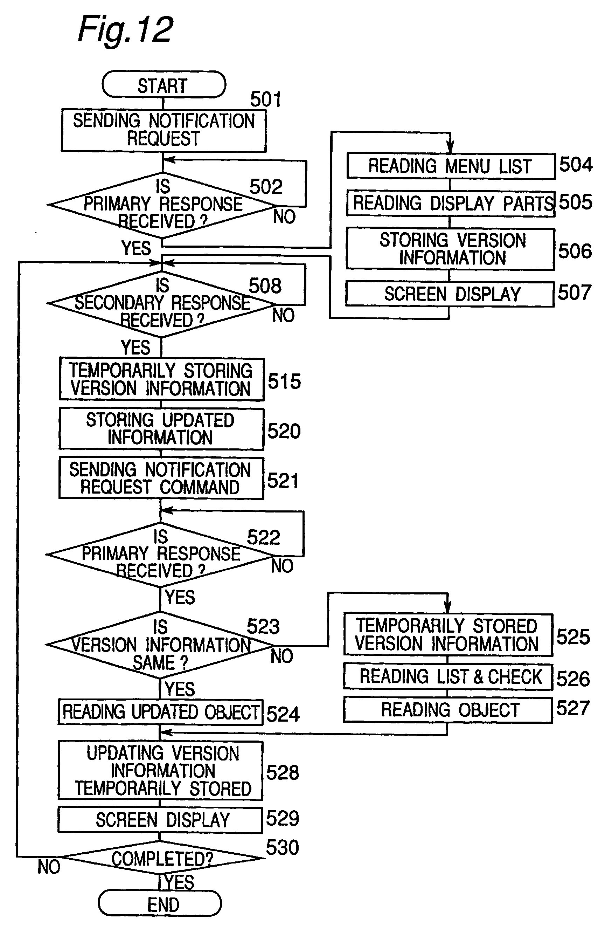

FIG. 12 is a flow chart that shows the controller processing in the second embodiment. In this case, the controller processing of the protocol shown in FIG. 11 is indicated. However, in this case, operation request 1 and operation response 1 are omitted.

First of all, when a device is connected to the transmission line 1, in processing 501, the controller sends the notification request to the device, and in processing 502, the controller waits for the response. By the way, in such event, if the device is not connected to the transmission line 1, for example, a still picture that indicates this device is chose, and the controller displays the menu screen of this device, the controller may send the notification request to the device or when the controller acquires the control right of the device or the controller begins to accumulate the device information, the controller may send the notification request.

In processing 504, 504, the controller reads the objects required in processing, and when the required object is properly read, the controller stores the version information in processing 506, and displays the version information on the screen in processing 507.

Thereafter, in processing 508, the controller waits the secondary response and because receiving the secondary response means that the version information has been changed, the controller temporarily stores the version information contained in the secondary response in the processing 515 after the secondary response is received, and stores the update information (identifier of the object updated) contained in the secondary response in processing 520.

Then, the controller gives the notification request to the device in processing 521 before the controller reads the object shown in the update information, and waits for the primary response to the notification request in processing 522. After the controller receives the primary response, the controller judges whether the version information obtained in the primary response is the same as that temporarily stored in processing 515, and if it is the same, using the updated information stored in processing 520, the controller reads the updated object in processing 524.

On the other hand, when the version information obtained from the primary response differs from that temporarily stored in processing 515, the controller overwrites the version information obtained from the primary response in processing 525 on the version information temporarily stored in processing 515 and temporarily stores, reads the list in the notified range in processing 526 from the device, checks whether it is same as that inside the controller, and reads objects from the device in processing 527 for those only different.

And in processing 528, the controller updates the temporarily stored version information as the new version information, and displays the updated information on the controller screen in processing 529. That is, because the version information is updated after the updated information is read, the reliability of the version information the controller possesses is improved.

Next, in processing 530, the controller judges whether the notification request to the device is stopped or not and if the notification request is continued, the controller repeatedly executes processing 508 to processing 530.

Now when the notification range is changed, for example, when the notification range is changed from the whole function information table to the specific component element (menu, etc.), processing is terminated in processing 530 and resumed in processing 501.

Consequently, repeating this processing, it becomes possible for the controller to quickly and accurately grasp the device state. That is, because the controller is able to hold the state of issuing the notification request, the device is able to immediately notify the controller of any changes when the device state is changed in any case, and it becomes possible to bring the state information of the device the controller holds to coincide with the state information in the device.

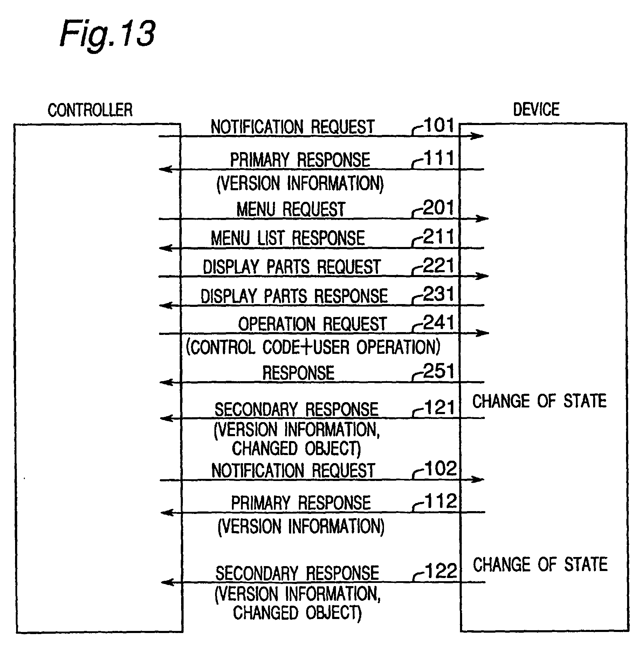

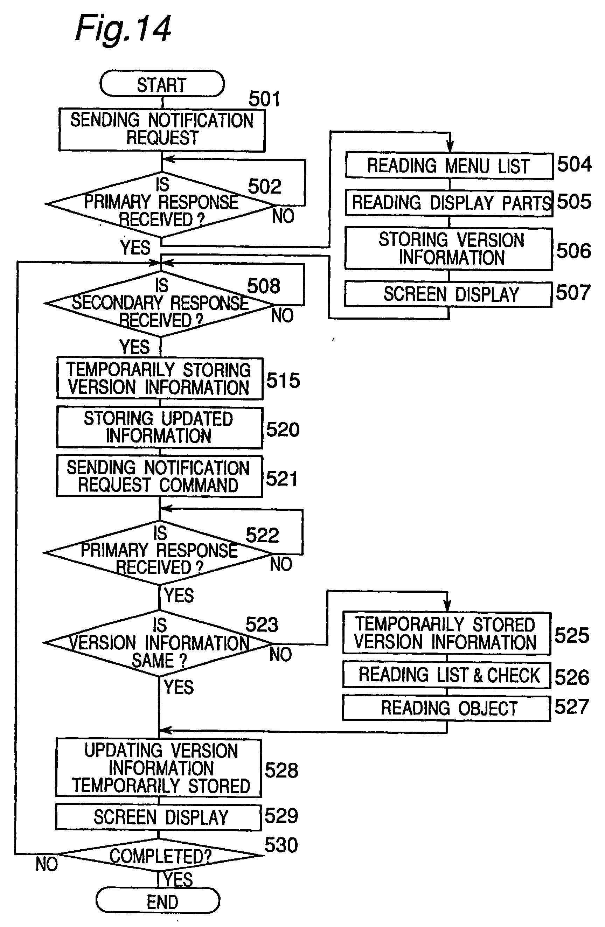

In the present embodiment, for the secondary response, the identifier (ID) of the updated object is transmitted together with the version information, but as shown in FIG. 13 and FIG. 14, for the secondary response, the updated object itself may be transmitted together with the version information.

FIG. 13 is the protocol illustration of the network control system when the object itself updated as the secondary response is transmitted, FIG. 14 is a flow chart showing the controller processing when the updated object is transmitted as the secondary response, and with an exception in that processing 524 (FIG. 12) for reading the updated object is omitted, the control operation shown in FIG. 11 and FIG. 12 is same, and the description is omitted here. Consequently, in the example shown in FIG. 13 and FIG. 14, compared to FIG. 11 and FIG. 12, it is no longer necessary to acquire the updated objects after the secondary response is received, and the processing could be simplified.

As described above, according to the present embodiment, the device possesses the state information that indicates the device state and the version information that indicates the version of the state information updated when the state information is updated, and the controller issues the notification request for requesting notification of change of the state information to the device when the controller uses the device state information, and receives the version information as the primary response to the notification request, and when the state information is changed in the device, the controller receives the updated version information as the secondary response to the notification request, and the controller reads the state information between the primary response and the secondary response. By doing so, even when any change occurs in the state in the device while the controller is reading the state information, the controller is able to immediately detect the state change in the secondary response, and is able to know the state change of the device quickly and accurately.

In addition, by issuing the notification request before the controller reads the state information of the device, the controller is able to hold the condition to constantly issue the notification request to the device, and even if the device state is changed in any case, the device is able to notify the controller of the change immediately, and the state information of the device the controller holds is able to be brought to coincide with the state information inside the device.

It becomes possible to transmit the updated state information only by including the updated version information and updated state information (identifier) in the secondary response from the device, and the traffic of the transmission line can be reduced. Furthermore, since by including the updated state information (state information itself), the controller is no longer necessary to read the changed state information after the controller detects the state change, processing of the controller is able to be simplified, and at the same time, on the device side, a trouble for enabling the controller to read the state information is eliminated, and the traffic of the transmission line is able to be further reduced.

The effects of the present embodiment are same as that described in the first embodiment.

### (Third Embodiment)

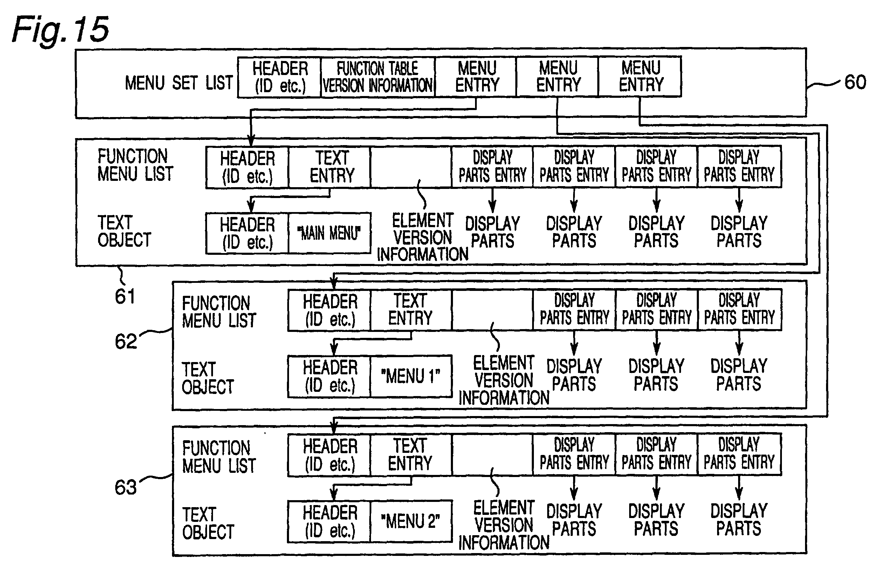

Next, referring now to FIG. 15 through FIG. 18, the third embodiment according to the present invention will be described. Now, the configuration and the operation of the device and the controller are partly modified from the second embodiment, and the main differences of the configuration example of the present embodiment shown in FIG. 15 from that of the second embodiment shown in FIG. 9 are that the menu set list 60 has a function table version information, the function menu lists 61, 62, 63 have the element version information, respectively, and these pieces of version information are created by the version information generating means 18, with all other configurations and operations same as those of the second embodiment, and explanation of those overlapping with the second embodiment will be omitted here.

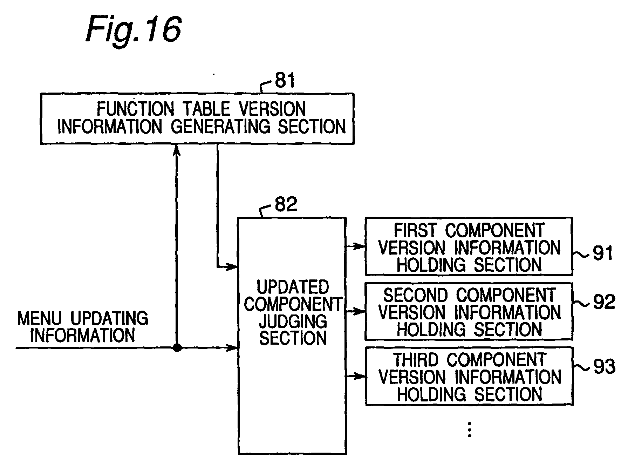

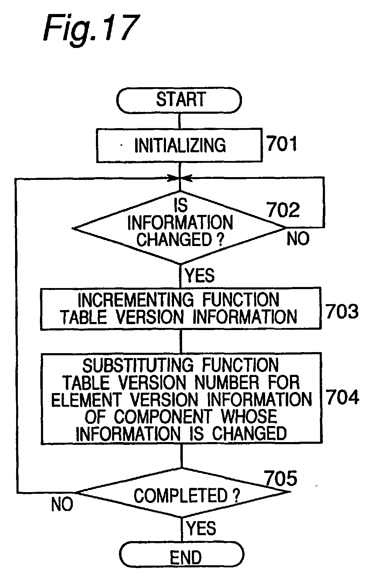

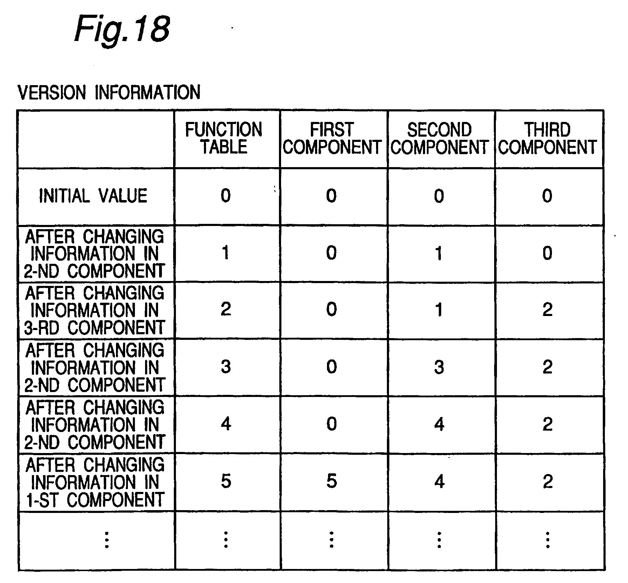

FIG. 15 shows a configuration example of the function information table 8 of the present embodiment, FIG. 16 shows a configuration example of the version information creating means 18, FIG. 17 shows the operation flow of the version information creating means 18, and FIG. 18 is an illustration that shows how the version information changes.

In the present embodiment, the function information table 8 is a table of the information (operation screen information) for configuring the operation screen, and in this function table 8, objects necessary for configuring the operating screen of the device, an identifier (ID) for identifying this object, etc. are included. This object is the component, and examples of the object include the function menu, display parts, text parts, text data objects, still picture data objects, etc.

In addition, the information that indicates the device condition is the information that contains the contents information and operation state information, and furthermore, for example, as in the case of the VTR reproduction button, it contains the condition of each display part such as the still picture with the button held depressed, the still picture with the button released, etc.

The function information managing means 17 in the device processes the information in the notification range contained in the notification request from the controller. The notification range is the range for which the device notifies the change when the state or function inside the device changes, and the range the controller desires is specified as the notification range. For the notification range, the whole function information table 8 (all the information contained in the function table 8) and components of the function table 8 (function menu unit, display part unit, etc.) can be specified. Consequently, the function information managing means 17 acquires the information in the notification range from the notification request from the controller and notifies the controller of the change of the notification range only when the state or function in the device changes. When a plurality of controllers exist, the function information control means 17 notifies the controller in whose notification range, the changed condition or function is included in conformity to the notification range of each controller. In this case, for the notification range, the whole function table and components only are designated, but for example, it is possible to designate the whole device (including the whole function table and device information), and the similar effects are able to be obtained.

By providing the notification range in this way, it is possible to prevent the data which the controller does not presently desire from being notified from the device, and if the controller does not need such information, there is no need to process these data, and the processing efficiency can be increased.

The version information creating means 18 of the device carries out version control, such as frequency of occurrences of information state changes in the function information table 8, and is formed with counters, etc., and the counter value in the version information creating means 18 is incremented by the function information control means 17 every time the information mentioned in RAM16 in the function information table 8.

The version information shown by this counter value, etc. are classified by the function table version information that indicates the version of function table 8 and the element version information that indicates the version of the components (function menu, display parts, data object, etc.) in the function table 8, and these pieces of version information are created by the version information creating means 18.

When a notification request is issued from this controller to the device with respect to changes of the state in the device (for example, changes of information of the function table 8), these pieces of version information are included in the primary response or the secondary response to the notification request in accordance with the notification range. It may be configured to give a plurality (3 or more) of responses to one notification response, as well as to include the version information at that point in each response in accordance with the notification range, and in such event, the state change of the device is able to be definitely recognized and at the same time, the traffic on the transmission line 1 can be reduced.

When the information of the function information table 8 of the new device and this version information are read in the controller, the controller registers this function information table 8 to the function database 13 and at the same time stores the version information of the function information table 8 in relation to the function information table 8. In such event, the storage of the version information may store it in memory together with the function information table 8 in the function database 13 or the function information table control means 12 stores and controls the version information. When the components in the function information table 8 are read together with the element version information, the controller stores the components in the function information table 8 in relation to the element version information. The element version information may be stored by the function information table control means 12, etc. and may be controlled.

FIG. 15 shows the configuration of the function information table 8 of the present embodiment, and since the device information parts 50 has the configuration same as that of the first embodiment, the device information part 50 are not illustrated in FIG. 15. Numeral 60 denotes a menu set indicating a set of function menus in the device, numeral 61 the main function menu that indicates the main menu of the device, numeral 62 the first sub function menu that indicates the first submenu of the device, and numeral 63 the second sub function menu that indicates the second submenu of the device. These main function menu, sub function menu, display parts, data objects, etc. are components of the function information table 8. In this event, the menu set list 60 has identifiers of function menus that show the main menu 61 and each sub menu 62, 63, and each function menu 61, 62, 63 are able to be detected by tracing the link from the menu set list 60.

The menu set 60 collects function menus inside the device, and in the header inside the menu set list in the menu set 60, the number and the size of the menus existing in this device are stated as unique information. The location of this menu list is recorded in the apparatus configuring information 7. It may be defined in advance that all the devices have this menu set 60 and the controller may be intended to acquire the menu set information using the command to request this menu set.

In addition, the menu set list has the function table version information. In this event, the function table version information may be stated in the header of the menu set list.

The menu set list 60 has the entry of all the function menus that belong to the menu set. In this entry, for example, the identifier of each function menu is entered, and flags that show the type of relevant function menus are also entered. Now, for the type of function menus, there are generally a main menu and sub menu. For this sub menu, for example, there are an operation menu that indicates part of functions inside the device, help menu that indicates the usage, contents menu that collects contents information only inside the device, an editing menu for carrying out editing operation, setting menu for setting the device, etc.

In this embodiment, each menu is identified by the use of a flag, but it may be configured to distinguish each menu by stating the main menu only in the top entry of the menu set list or stating in the apparatus configuration information 7, etc. or to acquire information on each sub menu by tracing successively from the function menu list of the main menu. It is also possible to enable direct access to each function menu list by the method such as predetermining ID of each function menu list without tracing from the entry of menu set.

Next, the main function menu 61 shows the main menu of the device, which comprises function menu lists, which are sets of display parts indicating the main function of the device. The function menu list is able to be linked from the entry inside the device information list, and has the operation screen and the entry of display parts for indicting the list itself. The configuration of the display parts list is same as that in the first embodiment shown in FIG. 4.

In addition, the main function menu 61 has the element version information that indicates its own version. This element version information is updated when any of the components which have the entry in the main function menu 61 is changed.

When the main function menu 61 has configuration set parts comprising a plurality of display parts 52, the element version information of the main function menu 61 is updated when the display part 52 in the configuration set parts is changed.

And to the display parts list that shows this display parts entry, the data object is arranged. In this event, the direct entry of each display part 52 may be arranged in the function menu list without using the display parts list, and in such event, flags, etc. for indicating objects may be noted in the entry of each display part 52.

In addition, the function menu list has the information for configuring the operation screen of the apparatus and has the information such as screen size which the function information table 8 assumes, as well as back ground colors, background patterns, etc. as unique information in the header, etc.

In addition, the data objects (texts, still pictures, etc.) showing this function menu list itself have a direct entry in the function menu list.

And the main function list 61 has the information for configuring the operation screen, and has the screen size assumed by the main menu, and the information on the background color and background pattern, etc. in the header, etc. as unique information. That is, in FIG. 15, it is stated as the text object, but the data object (text, still picture, etc.) of the display parts that indicate the function menu list itself in the main function menu 61 has an direct entry in the function menu list.

For the data object that shows the list itself, the display parts list may be used. The information that indicates these lists themselves may be distinguished from other data objects and display parts 52 using flags, etc.

In the function menu that indicates the main function menu 61, display parts that show the link to each sub menu are included. This display part is a still picture or text data, and shows the sub menu of the reference, and when the user chooses this display part on the controller, the reference sub-menu is displayed on the screen.

Similarly, the first sub function menu 62 indicates the first sub menu of the device and the set of display parts 52 that indicate the sub functions of the device, and comprises the function menu list. The function menu list is linked from the entry in the device information list, and has entries for the operation screen and of display parts 52 for indicting the list itself. The configuration of the display parts list 52 is the same as that of the first embodiment, and is the display element that shows the device function and state, and one of the components of the function information table 8.

It is also possible to configure that the display part 52 may have the element version information, and in such event, with the display part as a unit, the controller is able to directly recognize the display part changed n the device and the transmission and processing can be simplified.

The sub function menu 62 has the element version information that indicates its own version. This element version information is updated when any of the components which have the entry in the sub function menu 62 is changed.

By the way, when the sub function menu 62 has configuration set parts comprising a plurality of display parts 52, the element version information of the sub function menu 62 is updated when the display part 52 of this configuration set parts is changed.

The function menu list in the sub function menu 62 has the information for configuring the operation screen of the apparatus, and has the screen size assumed by the sub menu and information such as background colors, background patterns, etc. in the header as unique information.

The second function menu 63 is the same as the first sub function menu 62.

The menu and the configuration of the display part is the same as that of the second embodiment shown in FIG. 10.

In the version information generating means 18 shown in FIG. 16, the function table version information generating section 81 carries out version management of the information in the function information table 8, and is configured by the use of counters, etc., and every time the information stated in the function information table 8 is changed by the function information managing means 17, the component updating information is obtained from the function information managing means 17 and the counter reading in the function table version information generating means 81 is incremented. Now, this counter is an endless cyclic counter of finite bit length with sufficient bit length and when the maximum value is incremented, it becomes the minimum value. Now, the counter bit length is optional but it is desirable for the device to have a sufficient bit length so that the counter value does not make a circuit at least within the time while the controller has a control right or subscribing right of state change in order to prevent the different function information table 8 from being presented at the same counter value.

The updated component judging section 82 detects which component that corresponds to a plurality of component version information holding sections (91, 92, 93, ...) is changed using the component updating information obtained from the function information managing means 17, and stores the updated function table version information in the component version information holding section of the applicable component.

The first component version information holding section 91 holds, for example, the main function menu 61 shown in FIG. 15, that is, the element version information of the menu 300, and this value becomes the element version information in the function menu 61.

The second component version information holding section 92 holds, for example, the first sub function menu 62 shown in FIG. 15, that is, the element version information of the menu 310, and this value becomes the element version information in the first sub function menu 62.

The third component version information holding section 93 holds, for example, the second sub function menu 63 shown in FIG. 15, that is, the element version information of the menu 320, and this value becomes the element version information in the second sub function menu 63.

In such event, when the display part 312 in the menu 310 shown in FIG. 10 changes, the function table version information generating section 81 receives the component element updating information in that the display part 312 is changed from the function information managing means 17, increments the counter of the function table version information generating section 81, and updates the function table version information. The updated component element judging section 82 detects that the changed display part 312 belongs to the menu 310 by the component updating information and substitute the function table version information for the second component version information holding section 92 that holds the element version information of the menu 310. Consequently, the element version information of the menu 310 becomes the updated function table version information and is updated.

FIG. 17 shows the operation flow of the version information generating means 18, and first of all, in processing 701, the function table version information and each piece of element version information are initialized, for example, are zeroed.

Processing 702 is a step for waiting for changes of the information of the function information table, and when the information is changed, the function table version information is incremented in processing 703. This processing is carried out by the function table version information generating section 81.

In processing 704, the component whose information is changed is detected, and the function table version information is substituted for the element version information of this component. This processing is carried out by the updated component judging section 82.

Processing 705 judges completion of these series of processing, and for example, when the power supply of this device is turned on, these series of processing are repeated.

FIG. 18 is an illustration that shows the condition of changes of the version information, and in this case, the first component shows, for example, the menu 300, the second component the menu 310, and the third component the menu 320.

In the initial stage, all the version information is cleared to zero. In this event, when the information in the second component is changed, the function table and the second component element version information becomes 1.

Then, when the information in the third component is changed, the function table and the third component element version information becomes 2. In such event, the element version information of the second component is held 1 as it is.

When the information in the second component is changed thereafter, the function table and element version information of the second component becomes 3. That is, 2 did not exist in the element version information of the second component.

In the same manner, even when the first component, the second component, and the third component are changed, the function table version information and the element version information of the component including the changed information are updated.

The system control operation of the present embodiment is same as the operation of the second embodiment shown in FIG. 11 and FIG. 12, and the explanation is omitted here.

However, when this device is first accessed, the device is specified for the notification range, and as a response to this, the device returns the primary response 111 and in this primary response 111, the function table version information (or element version information) of the function table 8 that indicates the device function and state is included.

Now, the function table version information is updated (incremented) when the information inside the device is changed. Consequently, the information other than the notification range is changed, the function table version information of the function information table is updated. The version information is also updated when the component set parts, etc., which are sets of function menu in the notification range and display parts 52 and display parts 52 located below are changed. The function table version information may be configured in such a manner as to indicate the version of the whole device including the device information and function menu 51 and the display parts 52 located below.

When the whole function list is indicated as the notification range, the identifier (ID) of the main function menu 61, which is the main inside the device, may be returned as the primary response 111, and in such event, the device is enable to easily change its main menu. Furthermore, for example, it may be configured to return the identifier (ID) of the main function menu 61 as the primary response when the controller specifies the information that indicates the menu unit and main menu and sends the notification request to the device. It is also possible to return the menu set list of the menu set 60 a the primary response 111, and in such event, the controller recognizes the meaning of each function menu (main menu, sub menu, help menu) by the flags mentioned in the menu set list, and specifies the desired function menu by the identifier of the function menu stated in the menu set list. In this case, for example, the first entry of the menu list may be specified as the main menu and the main menu may be judged in order of entries to each function menu.

When the menu to be displayed is changed by operations, etc. of the user, the controller is able to make the notification request of the change in the device information to the menu newly displayed by specifying the new notification range when the notification request is issued, and the controller is able to acquire the state change information with a simple configuration and efficiently (that is, with small storage area). This is not limited to the menu but applicable in the same manner to each component.

The operation after the succeeding operation of the menu request 201 is the same as that of the second embodiment, and the explanation is omitted.

In the present embodiment, the version information generating means is composed by the function table version information generating section, updated component judgment section, and component version information holding section of each component, but it may be formed by the use of the function table version generating section and the component version information generating section equipped with a counter which is incremented when the information that belongs to the component is changed. In such event, each element version information is incremented every time the information in each component is changed, and takes the continuous value for each component. And some element version information is independent from the function table version information or other element version information. Consequently, in such event, if there are many components with version information, processing of devices becomes somewhat complicated, but by confirming the element version information, the frequency in which the state is changed in the component is able to be recognized in addition to the similar effects of the embodiment, and in particular, when the element version information obtained in the secondary response differs from the element version information of the primary response after this secondary response, it is able to identify how many times the information has been changed during this period.

In the present embodiment, the primary response contains the version information, but it may be configured to contain identifiers of objects which have been changed from the secondary response immediately before to the primary response together with the version information in the primary response, and in such event, even when the version information of the secondary response differs from that of the primary response thereafter, the controller is able to easily identify objects which have been changed between the secondary response and the primary response, and there is no need for searching changed objects by the list, etc., making it possible to achieve simplified processing.

As described above, according to the present embodiment, since the device has a function table that indicates the device and state, components that compose the function table, and element version information that shows the version of components of the function table, and the controller uses the element version information to detect changes of information in the function table when the information in the function table is used, even when the function and the state are changed inside the device due to controls from other controllers or spontaneous change inside the device, the controller can easily detect the change, and at the same time, the controller can definitely identify the state information in the device without any trouble. Furthermore, since the device has version information component by component, the controller is able to meticulously grasp device function and state and at the same time, since the changes of the component are able to be directly detected, it is easy to acquire the information of the changed component when the changed information is acquired, making it possible to simplify the controller processing, and the processing efficiency is able to be improved. Furthermore, since the changed component is directly accessed by the controller, the better efficiency is achieved also for the device.

Since the device has a function table that indicates the device function and state, components that compose the function table, and element version information that shows the version of components, and the controller uses the function table version information to detect changes of the information in the function table and uses element version information to detect changes of information in the components when the component information in the function table is used, when the controller displays all the information of the function table or only one menu, etc., the device is able to notify the information changed which the controller desires in accord with the request of the controller, and the controller is able to accurately grasp the device information and at the same time, highly efficient processing with less waste in the transmission line and processing can be achieved.

Since the device has a function table that indicates the device function and state, a plurality of components that compose the function table, and element version information that shows the version of components for each component, and the controller uses the element version information to detect changes of information in the function table when the information in the function table is used, even when a plurality of menus exist in the device, the controller is able to accurately grasp the information of each menu and at the same time, is able to acquire necessary information quickly as required.

Since the device has a function table that indicates the device function and state, component that composes the function table, and element version information that shows the version of components, and the controller uses the information of the notification range shown by each component and issues the notification request to the device for requesting notification on information change in the notification range when the information in the function table of the device is used, receives the element version information that corresponds to the notification range as the primary response to the notification request, receives the updated element version information as the secondary response to the notification request when the information within the notification range is changed, even when the state change occurs in the device while the controller is reading the state information, the controller is able to immediately detect the state change by the secondary response and can learn the state change of the device quickly and accurately.

Since the device has a function table that indicates the device function and state, component that composes the function table, and element version information that shows the version of components, and the controller uses the information of the notification range shown by each component and issues the notification request to the device for requesting notification on information change in the notification range using the information on the notification range shown with each component when the information in the function table of the device is used, receives the element version information that conforms to the notification range as the primary response to the notification request, and when the information within the notification range is changed, receives the updated element version information as the secondary response to the notification request, and reads the information within the notification range between the primary response and the secondary response, the controller is able to hold the condition in which the notification request is constantly issued to the device, and even when the device state is changed at any time, the device is able to notify the controller immediately of the change, making it possible to constantly bring the state information of the device which the controller possesses in agreement with the state information inside the device.

Because the element version information that indicates the component version is the function table version when the component information is changed, the version information is able to be generated for each component with a simple configuration.

Because the component is the menu, the version information can be given in an appropriate unit as the display unit of the controller, and the processing efficiency of the controller can be improved.

Because the component is the display part, the information which the controller requires is able to be specified in a minute unit, and when the component is changed, the transmission efficiency and the processing efficiency are able to be improved.

Because the secondary response from the device contains the updated element version information and updated information, the updated information is able to be quickly transmitted to the controller, and the transmission efficiency is improved as well as the processing required for transmission is able to be simplified.

### (Fourth Embodiment)

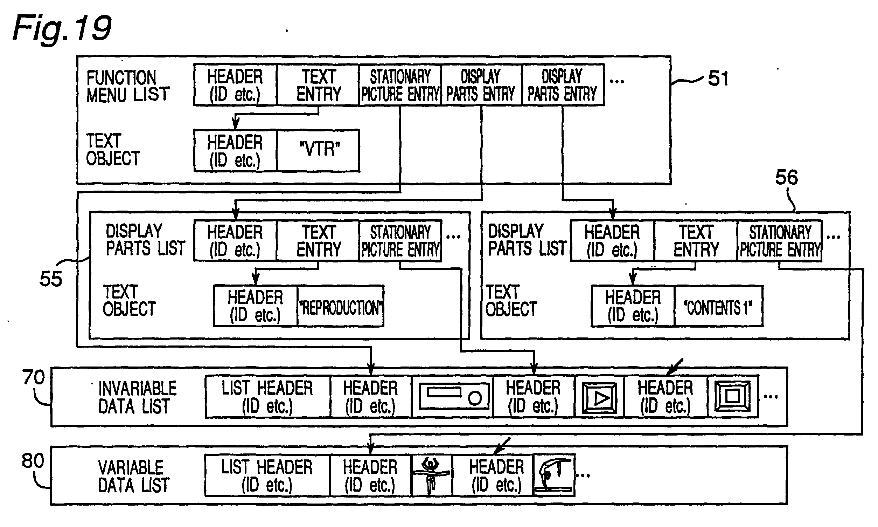

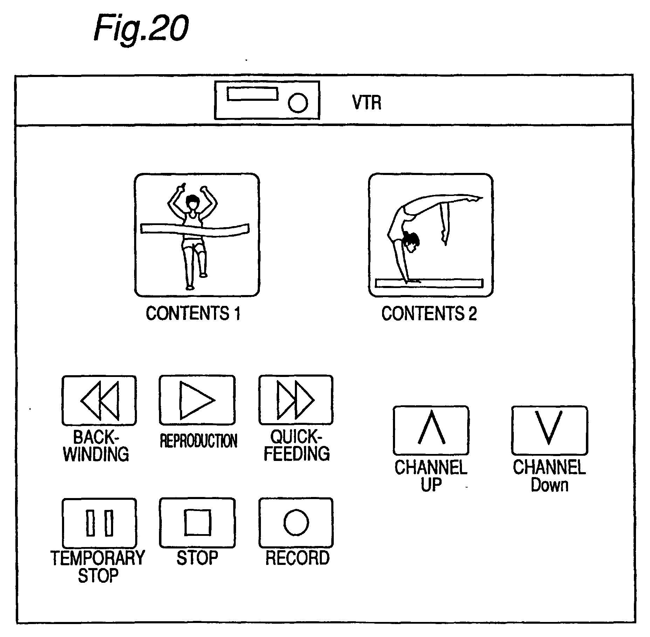

Referring now to FIG. 19 and FIG. 20, the fourth embodiment according to the present invention will be described.

FIG. 19 is a block diagram of the function information table that shows the fourth embodiment according to the present invention, and FIG. 20 is an illustration showing one example of the screen display of the present embodiment. The controller and device configuration and the protocol when the device information is acquired and the device information parts are same as those of the first embodiment, and the explanation will be omitted in this section.

In FIG. 19, numeral 51 denotes a function menu list that indicates component assembly parts, numeral 55 an invariable display parts list that possesses invariable data only as the data object, numeral 56 a variable display parts list that contains the variable data as the data object, numeral 70 an invariable data set that indicates a set of invariable data, and numeral 80 a variable data set that indicates a set of variable data. In the present embodiment, FIG. 19 shows the logical configuration of the function information table and the physical layout is optional.

Now, each part comprises an object of a list form, and data objects which do not have child objects (text objects, still picture object, etc.) and list are generically called objects. That is, for the object information, there are data objects, lists, various header information, and unique information. Each object does not always have to take a list structure, and may be configured with data objects only or unique information and data objects.

At the header section, each object has an identifier (ID) for identifying each object, type information that shows the type of object, attribute information that indicates the configuration whether it has a child object or not, etc., size information that shows the size of the object, and others. Similarly to the first embodiment, each object shows the child object by the ID information in the entry stated in the list.

For the objects such as text objects, etc. which have a small data amount, the objects themselves may be entered in the entry section in the list. The unique information of each list should be entered in the header, etc. in each list and the unique information of the data object should be entered in the entry. In addition, the unique information may be stated in either the object or the entry.

Next, the function menu 51 shows a menu which is an aggregate of display parts (invariable display parts 55 and variable display parts 56) that show device functions, and comprises function menu lists. The function menu list is configured with function menu lists. The function menu list 51 is linked from the menu entry inside the device information list 50, as described in FIG. 4 of the first embodiment and has an entry of operation screen display parts (invariable parts 55) and display parts (variable display parts 56) that would show the list 51 itself as shown in FIG. 19.

By the method of predetermining ID of the function menu list 51, direct access to the function menu 51 may be obtained without tracing from entries of the device information list. In this event, the display parts for operation screen and the list itself (invariable parts 55 and variable display parts 56) are arranged by the use of the display parts list, and the data objects are arranged linked to the entry of the display parts list.

Now, the entry of each display part (invariable parts 55 and variable display parts 56) may be directly arranged in the function menu list without using the display parts list.

Furthermore, the function menu list has the information for configuring the apparatus operation screen, and has the information such as screen size which the function information table 8 assumes, as well as background color, background patterns, etc. in the header inside, etc. as the unique information.

On the other hand, the data objects (texts, still pictures, etc.) that indicate this function menu list itself have direct entries in the function menu list.

The data object that shows the list itself may be expressed by the use of the display parts list. In addition, the information that shows these lists themselves may be distinguished from other data objects or display parts (invariable parts 55 and variable display parts 56) by the use of flags, etc. That is, the materializing form of the display parts is available in two forms: one to use the display part list and the other to e configured by the data objects only.

And the display parts (invariable parts 55 and variable display parts 56) are parts for displaying icons, buttons, sliders, check boxes, text entries, etc., and in these display parts lists, they have unique information such as the type of display parts (invariable parts 55 and variable display parts 56), information required for each display part (for example, in the case of the slider, variable range, step value, initial value, etc.), etc.

In addition, this display parts list has text objects, still picture objects, and other entries, and in this entry, the display parts list has the unique information such as flags that shows the kind of texts and still pictures (format), etc., and furthermore, positional information on the screen for showing the relative position to the menu screen which the device assumed.

In addition, as with the first embodiment, each display part list may have the layout information that shows the mutual relation of display parts with respect to display parts which are in close relation from the functional and screen design viewpoints as relational information that has the same information (for example, same value). In the case of new functions which are unable to be assumed presently, by arranging the still picture, etc. that shows this new function as a display part, the data of this new function is transmitted to the controller, and the information on this new function is able to be presented to the user, and the fact that the user chose this still picture, etc. is notified to the device, and by the device realizing this function, the controller does not need to understand the meaning of this new function and this new function is able to be used easily from the controller.

And the data object which has no possibility to change in accord with the device state, etc. and the data object of the invariable display parts are stored in the invariable data list 70 which has a list structure and the data objects which has a possibility to change in accord with the device state and the data object which has a possibility to change in accordance with the device state, etc. of the variable display parts are stored in the variable data list 80 which has a list structure. In this event, the data objects which show the list itself are stored in the same manner either in the invariable data list or in the variable data list. In FIG. 19, the still picture data objects only are displayed, but this invention should not be limited to this only.

The invariable data list 70 is one example of the invariable data set collecting the invariable objects and the variable data list 80 is one example of the variable data set collecting the variable objects.

Now, because for example, still pictures that show the device menus and reproduction button, stop button, etc. are not changed by the device state, and even if these display parts are not displayed as part of the menu on the display screen of the controller at the present time, they will never be replaced in the device, they are stored in the invariable data list.

Furthermore, with respect to the still picture which looks like a convex form to be used when a button is expressed and the still picture which looks like a concave form to be used when the button is depressed, if the functions shown by these buttons are not changed by the device state, these buttons are stored in the invariable data list.

The contents in the device, for example, still pictures that show each program recorded in the VTR tape (in FIG. 19, marathon meet or gymnastics competition) are highly likely to be deleted from the device because programs recorded in the tape differ when the tape is changed. The STB program information, etc. belong to this classification, too. Consequently, the still picture that shows contents in the device is stored in the variable data list 80. That is, data objects such as changing still pictures, etc. by changing the device state and variable display parts are stored in the variable data list.

FIG. 20 shows one example of the screen display of the present embodiment, and the information in the function information table 8 is arranged at the position determined by the layout information stated in the function menu list 51, etc.

In this way, by storing the data object in the function information table by dividing a variable object set and an invariable object set, the controller can easily judge whether cashing is effective or not for the objects the controller once read, and if effective, by caching the invariable object, the operation screen with the display parts, etc. quickly updated can be provided to the user. Furthermore, even when the controller is unable to read all the invariable objects, by caching some of the invariable objects in the invariable data set, the operation screen with the display parts, etc. quickly updated can be provided to the user even in a small memory region.

In addition, it is also possible for the device to assign the priority to the invariable objects in order of the possibility of frequent use, for the controller to cache by assigning priority to display elements (data objects, display parts, function menus) with many display frequencies, and for the controller to cache by assigning priority to display elements in order of closeness to the main menu, and in such case, caching can be carried out more efficiently.

It becomes also possible to assign different storage region to the variable data and the invariable data, respectively, in the device, and the storage location of the invariable data can be prevented from being changed by the variable data that changes from hour to hour; this enables data rearrangement such as garbage collection to be carried out for the variable data set only, and device processing can be simplified and the storage region can be efficiently used.

In the present embodiment, the still picture is used to explain for storing in variable data set and the invariable data set, but this shall not be limited to the still picture only, but can be applicable to text data and videos, and optional display parts such as sliders and check boxes, as well as function menus, and similar effects are obtained.

Furthermore, it is also possible to divide the apparatus information other than objects into the variable data and the invariable data and to register them to the invariable data set and a variable data set, respectively, and the similar effects are obtained.

In the present embodiment, the invariable object set and the variable object set are materialized using the list structure, but it is also possible to materialize the invariable object set and the variable object set by assigning a variable data flag or invariable data flag to each object.

As described above, according to the present embodiment, the device has a plurality of objects that composes the device operation screen, the object comprises the invariable object that is invariable irrespective of the device state and the variable object that is variable in accord with the device state, while the controller is able to easily detect whether the object is variable data or invariable data by reading the object from the device, carrying out caching for the invariable object, and displaying the object on the display screen, and caching, etc. can be carried out effectively, and the resources which the controller possesses can be effectively utilized.

Consequently, even a controller with little resources (for example, storage region) can provide a user with an operation screen that can be quickly updated and achieves good operability by carrying out caching of the data.

The device is able to assign the separate storage region to the variable data and the invariable data, respectively, because the device has an invariable data set that comprises invariable objects only and a variable data set that comprises variable objects, and the storage location of the invariable data can be prevented from being changed by the variable data that changes from hour to hour; this enables data rearrangement such as garbage collection to be carried out for the variable data set only, and device processing can be simplified and the storage region can be efficiently used.

### (Fifth Embodiment)

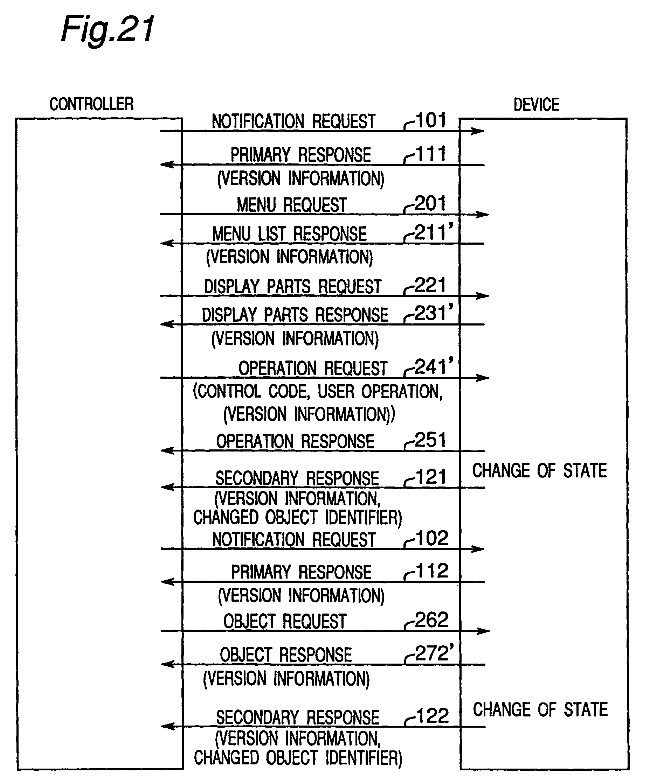

Referring now to FIG. 21, the fifth embodiment according to the present invention will be described. Now, the configuration of the device and the controller are same as the first and the second embodiments shown in FIG. 1, FIG. 2, FIG. 4 and FIG. 9, explanation of overlapping sections will be omitted. The control operation are same as the control operation of the second embodiment excepting that the version information is included in the menu list response 211, display parts response 231, operation request 241, and object response 272.

Referring now to FIG. 21, the control operation of the controller and the device of the network control system in the fifth embodiment will be described as follows.

First of all, when the device is connected to the transmission line 1, the controller on this transmission line 1 recognizes the new device by bus resetting, etc. reads the device information part 50 from the new device through the transmission line 1 by the instruction of the function information table managing means 12, and reads and registers this device information part 50 to the function information table 8 of the function database 13 of the controller.

The display/function selection means 14 refers the function information table 8 or part of the function information table 8 in the function database 13 through the function information table managing means 12.

When the display/function selection means 14 displays a table to devices connected to this controller, the display/function selection means 14 uses the function information table managing means 12 to read the data objects (text objects, still picture objects, etc.) that belong to the device information parts 50 from the function information table of all the devices registered to the function database 13, and displays these on the screen.

Then, when the user selects, for example, the device still picture object (still picture that belongs to the device information part 50) by the pointing function (for example, crosshair), etc. of the remote controller, the display/function selection means 14 requests the main menu to the function table managing means 12, and the function information table control means 12 reads the function menu 51 that shows the main menu of this device and the display parts that belong to this function menu 51, and stores in the function information table 8 in the controller.

In such event, first of all, the controller transmits the notification request 101 shown in FIG. 21 to the device as a command and declares that the controller grasps the device condition and controls its action. As a response to this, the device returns the primary response 111, and in this primary response 111, the version information of the function information table 8 that indicates the function of the device is contained.

In addition, in this notification request 101, the information on the notification range that indicates the range the controller hopes to bring the information to coincide with the device is included.

Now, the version information of the function information table is updated (incremented) when the information inside the device is changed. Consequently, the information other than the notification range is changed, the version information of the function information table is updated. The version information is also updated when the component set parts, etc., which are sets of function menu in the notification range and display parts 51 and display parts 52 located below this are changed. The version information may be configured in such a manner as to indicate the version of the whole device including the device information parts 50 and function menu 51 and the display parts 52 located below this.

For the primary response 111, the identifier (ID) of the main function menu 51, which is the main inside the device, may be returned, and in such event, the device is enable to easily change its main menu.

Next, in order to acquire the contents of the function menu 51, the function information table managing means 12 in the controller transmits the menu request 201 to the device, and the device returns the list of identifiers (ID) of the display parts 52 that belong to the function menu 51 as the menu list response 211', which is the response to this request.

The function information table managing means 12 sends a display parts request 221 with the identifier of the display parts 52 attached in order to acquire the entity of each display part and acquires each display part 52 at the display part response 231', which is the response to this request.

And in each menu list response 211' and display parts response 231', the version information at the present point is included. Consequently, it becomes possible to check the state change of the device while the controller is acquiring the data of the function menu by these pieces of version information and the information inside the function menu is able to be quickly updated. Furthermore, it becomes possible for the target to change the information in the function menu at an optional timing and this can simplify the target processing, reduce the memory region, and increase the processing speed.

In this way, the information of the device function information table 8 is read by the function information table managing means 12.

Consequently, the display/function selection means 14 reads the display parts 52 from the function information list of each function mentioned in the function menu list using the function information table managing means 12, and displays the display parts 52 corresponding to each function on the screen. By this, on the screen, it becomes possible to display the display parts 52 that show all the functions of this device.

In this case, the identification of each display part 52 is carried out by the unique ID of the device and ID of each display parts 52.

Next, when the user selects the display parts 52 that show, for example, reproducing functions of the device by the pointing functions, etc. of the remote controller, the display/function selection means 14 transmits the identifier control code (ID) of the display parts 52 designated by the device, the version information which the controller possesses, and the user operation information (for example, "selection") to the device as operation request 241'.

Consequently, even when the device updates the contents of the function menu nearly simultaneously with the user operation, the device is able to know which menu the user referred to when the user carried out the operation, and the device can carry out optimum processing in accordance with individual cases. For example, if the user operates the display part which is not related to the display parts changed by the menu, the device accepts the operation, and when the user operates the changed display part itself, the device is able to reject the operation.

As responses to the operation request, in the operation response 251, responses such as whether the operation request 241' is received, rejected, not supported by the device or not are returned.

Then, when the state in the device changes and the objects (function menu list, display parts list, data object) in the device change, the device returns the secondary response 121 to the notification request 101. In this secondary response 121, the incremented version information and identifiers (ID) of objects changed are included.

And the function information table managing means 12 detects that objects in the device have changed by receiving this secondary response 121, and using the identifier of the changed object, requests the changed object, and before requesting the changed object, the secondary notification request 102 is sent to the device. And for this response, the primary response 112 is obtained. In this primary response 112, the version information of the device is included.

First of all, when the version information contained in the primary response 112 of the notification request 102 is the same at the version information of the secondary response 121, since the device state is not changed from the secondary response 121, the difference between the controller information and the device information is the object notified by the secondary response 121. Consequently, this object is requested by the object request 262 and the object changed by the object response 272', which is the response to this, is obtained. For example, if the changed object is the function menu 51 (if the identifier of the function menu list is notified in the secondary response 121), the menu request is carried out as this object request, and for the object response, the menu list response is obtained, the function menu list is acquired, and the controller checks the display parts list changed in the function menu list, and requests display parts to the changed display parts list, and acquires the data object of the display parts 52 by the display parts response.

In these object responses, the version information is included, and by this information, the controller is able to check the device state change while the controller is acquiring the data of the function menu, and the information in the function menu is able to be quickly updated.

On the other hand, when the version information of the second primary response 112 differs from the version information of the secondary response 121, the difference between the controller information and the device information is not definite. That is, because the version information incremented every time the information inside the device changes differs, the information in the device is changed between the secondary response 121 and the primary response 112. Consequently, in this event, the controller first reads the list (function menu list, display parts list, etc.) only of the objects in the notification range held by the controller in the object request 262. And the controller judges whether the identifier (ID) of each object stated in this list coincides with the identifier (ID) of the objects in the information held in the controller, and sends the objects with difference only to the device as the object request (not illustrated in FIG. 21) and obtains them in the object response (not illustrated in FIG. 21).

Consequently, it becomes possible to bring the information the controller holds to coincide with the information of the device even when the data object only is changed or the list itself is changed. Consequently, it is no longer necessary to use the information of the updated object acquired in the secondary response 121. Thereafter, the controller updates the version information of the function information table 8 in the controller.

In this way, constantly making the notification request before the controller acquires the device information, the time the controller does not make the notification request to the device can be reduced and the device change can be quickly and definitely acquired.

And after the function information table 8 in the controller is updated, the function table managing means 12 instructs the display/function selection means 14 to update the screen display, and the display/function selection means 14 updates the screen.

It is stated that the identifier of the changed object is included in the secondary response 121, but when the object entity (for example, when the display part is changed, the display parts list and the data object that belongs to this list) may be transmitted as the secondary response, and in such event, the display parts request 221 and the display parts response 231' are no longer needed and processing is able to be simplified.

It is also possible to allow the operation response 251 to have the information that indicates the state change in the device that is generated directly for the operation request 241', and in such event, the secondary response 121 may be transmitted when changes other than this state change directly generated. For example, for changes of the still picture on the operation screen (from convex display to concave display) for the operations such as pressing and releasing of the button on the operation screen, etc., a quick response is able to be obtained, and the number of frequencies to carry out the notification request can be reduced, and the traffic of the transmission line 1 can be reduced.

In addition to the requests/responses, etc. shown in the present embodiment, communication may be carried out between the controller and the device, and though it is not illustrated, for example, it may be configured to return the recognition signal for confirming that the other party has received each request and response.

As described above, by providing the menu list response 211', display parts response 231', and object response 272' with the version information, it becomes possible for the controller to check the device state change while the controller is acquiring the data of the function menu, making it possible to quickly update the information in the function menu. Furthermore, the target is able to change the information in the function menu in an optional timing, and the target processing can be simplified, the memory region can be reduced, and processing speed can be increased.

When the user operates the display part, by sending the identifier of the display part 52, version information which the controller possesses, and the information which the user operated to the device, and even when the device updates the contents of the function menu nearly simultaneously with the user operation, the device is able to know which menu the user referred to when the user carried out the operation, and the device can carry out optimum processing in accordance with individual cases. For example, if the user operates the display part which is not related to the display parts changed by the menu, the device accepts the operation, and when the user operates the changed display part itself, the device is able to reject the operation.

### INDUSTRIAL APPLICABILITY

According to the present embodiment, the device possesses the state information that indicates the device state and the version information that indicates the version of the state information, and when the state information is updated, the relevant version information is updated, and by reading the state information and the version information from the device, the controller is able to easily detect the device state change and at the same time is able to definitely identify the state information in the device without trouble even when the state change inside the device occurs due to control of other controllers or spontaneous change inside the device.

The device has the state information that indicates the device condition and version information that indicates the version of the state information, and the version information is updated when the state information is updated, and the controller issues the notification request to the device for requesting the notification on the change, and the controller receives the version information as the primary response to the notification request, and when the state information is changed inside the device, the controller receives the updated version information, and thereby the controller is no longer necessary to constantly monitor the device by polling, etc., making it possible to simplify the controller processing, and at the same time, since the device that has caused the state change spontaneously notifies the controller of the state change, the controller is able to quickly detect the state change inside the device.

It becomes possible to transmit the updated state information only by including the updated version information and updated state information (identifier) in the secondary response from the device, and the traffic of the transmission line can be reduced. Furthermore, since by including the updated state information (state information itself), the controller is no longer necessary to read the changed state information after the controller detects the state change, processing of the controller is able to be simplified, and at the same time, on the device side, a trouble for enabling the controller to read the state information is eliminated, and the traffic of the transmission line is able to be further reduced.

The device has the operation screen information that indicates the device operation screen and the version information that indicates the version of the operation screen information, and the controller reads the operation screen information and the version information from the device, and detects the change of the device operation screen information by the version information, thereby making it possible for the controller to easily detect changes of the device state due to instructions from other controllers or spontaneous changes inside the device, and at the same time enabling the controller to easily and definitely identify the operation information that correctly reflects the device condition.

The device comprises one or more and a plurality of objects and has the operation screen information that indicates the device operation screen and the version information that indicates the version of the operation screen information, and the controller issues the notification request to the device for requesting the notification on the change if any state information is changed, and the controller receives the version information as the primary response to the notification request, and when the state information is changed inside the device, the controller receives the updated version information, and thereby the controller is no longer necessary to constantly monitor the device by polling, etc., making it possible to simplify the controller processing, and at the same time, since the device that has caused the state change spontaneously notifies the controller of the state change, the controller is able to quickly detect the state change inside the device. Consequently, it is able to quickly present the latest operation information to the user and provide a user-friendly interface to the user.

It becomes possible to transmit the updated object information only by including the updated version information and updated object information (identifier) in the secondary response from the device, and the traffic of the transmission line can be reduced. Furthermore, since by including the updated object information (object itself), the controller is no longer necessary to read the changed object after the controller detects the operation screen information change, processing of the controller is able to be simplified, and at the same time, on the device side, a trouble for enabling the controller to read the state information is eliminated, and the traffic of the transmission line is able to be further reduced. Consequently, it is able to quickly present the screen update to the user and the improved operability and visibility of the operation screen are achieved.

Because the version information is the counter value that is incremented every time the information inside the device is updated, the reliable version information is able to be created by simple configuration and simple processing.

According to the second embodiment of the present invention, the device possesses the state information that indicates the device state and the version information that indicates the version of the state information, and the version information is updated when the state information is updated, and the controller issues the notification request for requesting notification of change of the state information to the device when the controller uses the device state information, and receives the version information as the primary response to the notification request, and when the state information is changed in the device, the controller receives the updated version information as the secondary response to the notification request, and the controller reads the state information between the primary response and the secondary response. By doing so, even when any change occurs in the state in the device while the controller is reading the state information, the controller is able to immediately detect the state change in the secondary response, and is able to know the state change of the device quickly and accurately.

In addition, by issuing the notification request before the controller reads the state information of the device, the controller is able to hold the condition to constantly issue the notification request to the device, and even if the device state is changed in any case, the device is able to notify the controller of the change immediately, and the state information of the device the controller holds is able to be brought to coincide with the state information inside the device.

According to the third embodiment, since the device has a function table that indicates the device and state, components that compose the function table, and element version information that shows the version of components of the function table, and the controller uses the element version information to detect changes of information in the function table when the information in the function table is used, even when the function and the state are changed inside the device due to controls from other controllers or spontaneous change inside the device, the controller can easily detect the change, and at the same time, the controller can definitely identify the state information in the device without any trouble. Furthermore, since the device has version information component by component, the controller is able to meticulously grasp device function and state and at the same time, since the changes of the component are able to be directly detected, it is easy to acquire the information of the changed component when the changed information is acquired, making it possible to simplify the controller processing, and the processing efficiency is able to be improved. Furthermore, since the changed component is directly accessed by the controller, the better efficiency in processing is achieved also for the device.

Since the device has a function table that indicates the device function and state, components that compose the function table, and element version information that shows the version of components, and the controller uses the function table version information to detect changes of the information in the function table and uses element version information to detect changes of information in the components when the component information in the function table is used, when the controller displays all the information of the function table or only one menu, etc., the device is able to notify the information changed which the controller desires in accord with the request of the controller, and the controller is able to accurately grasp the device information and at the same time, highly efficient processing with less waste in the transmission line and processing can be achieved.

Since the device has a function table that indicates the device function and state, a plurality of components that compose the function table, and element version information that shows the version of components for each component, and the controller uses the element version information to detect changes of information in the function table when the information in the function table is used, even when a plurality of menus exist in the device, the controller is able to accurately grasp the information of each menu and at the same time, is able to acquire necessary information quickly as required.

Since the device has a function table that indicates the device function and state, component that composes the function table, and element version information that shows the version of components, and the controller uses the information of the notification range shown by each component and issues the notification request to the device for requesting notification on information change in the notification range when the information in the function table of the device is used, receives the element version information that corresponds to the notification range as the primary response to the notification request, receives the updated element version information as the secondary response to the notification request when the information within the notification range is changed, even when the state change occurs in the device while the controller is reading the state information, the controller is able to immediately detect the state change by the secondary response and can learn the state change of the device quickly and accurately.

Since the device has a function table that indicates the device function and state, component that composes the function table, and element version information that shows the version of components, and the controller uses the information of the notification range shown by each component and issues the notification request to the device for requesting notification on information change in the notification range using the information on the notification range shown with each component when the information in the function table of the device is used, receives the element version information that conforms to the notification range as the primary response to the notification request, and when the information within the notification range is changed, receives the updated element version information as the secondary response to the notification request, and reads the information within the notification range between the primary response and the secondary response, the controller is able to hold the condition in which the notification request is constantly issued to the device, and even when the device state is changed at any time, the device is able to notify the controller immediately of the change, making it possible to constantly bring the state information of the device which the controller possesses in agreement with the state information inside the device.

Because the element version information that indicates the component version is the function table version when the component information is changed, the version information is able to be generated for each component with a simple configuration.

Because the component is the display part, the information which the controller requires is able to be specified in a minute unit, and when the component is changed, the transmission efficiency and the processing efficiency are able to be improved.

Because the secondary response from the device contains the updated element version information and updated information, the updated information is able to be quickly transmitted to the controller, and the transmission efficiency is improved as well as the processing required for transmission is able to be simplified.

According to the fourth embodiment, the device has a plurality of objects that composes the device operation screen, the object comprises the invariable object that is invariable irrespective of the device state and the variable object that is variable in accord with the device state, while the controller is able to easily detect whether the object is variable data or invariable data by reading the object from the device, carrying out caching for the invariable object, and displaying the object on the display screen, and caching, etc. can be carried out effectively, and the resources which the controller possesses can be effectively utilized.

Consequently, even a controller with little resources (for example, storage region) can provide a user with an operation screen that can be quickly updated and achieves good operability by carrying out caching of the data.

The device is able to assign the separate storage region to the variable data and the invariable data, respectively, because the device has an invariable data set that comprises invariable objects only and a variable data set that comprises variable objects, and the storage location of the invariable data can be prevented from being changed by the variable data that changes from hour to hour; this enables data rearrangement such as garbage collection to be carried out for the variable data set only, and device processing can be simplified and the storage region can be efficiently used.

According to the fifth embodiment, by providing the menu list response, display parts response, and object response with the version information, it becomes possible for the controller to check the device state change while the controller is acquiring the data of the function menu, making it possible to quickly update the information in the function menu. Furthermore, the target is able to change the information in the function menu in an optional timing, and the target processing can be simplified, the memory region can be reduced, and processing speed can be increased.

When the user operates the display part, by sending the identifier of the display part, version information which the controller possesses, and the information which the user operated to the device, and even when the device updates the contents of the function menu nearly simultaneously with the user operation, the device is able to know which menu the user referred to when the user carried out the operation, and the device can carry out optimum processing in accordance with individual cases. For example, if the user operates the display part which is not related to the display parts changed by the menu, the device accepts the operation, and when the user operates the changed display part itself, the device is able to reject the operation.

## Claims

1. A network control system in an AVC system to which a plurality of AV apparatuses are connected via a transmission line, comprising:
a controller equipped with a user interface; and
a device to be controlled,
wherein the device has apparatus information in device and version information indicative of a version of the information inside the device to be updated when the apparatus information in device is updated,
characterized in that the controller reads the apparatus information and the version information inside the device from the device and detects a change inside the device by the version information.

2. The network control system according to claim 1, characterized in that, the apparatus information of the device inside is state information showing a condition of the device, and
the device has the state information showing the condition of the device and version information that shows the version of the state information to be updated when the state information is updated, and
the controller reads the state information and the version information from the device and detects the change of the device by the version information.

3. The network control system according to claim 2, characterized in that, the controller issues a notification request to the device for requesting notification of the change of the state information when the controller uses the state information of the device, and
receives the version information as the primary response to the notification request, and if the state information is changed in the device, the controller receives the updated version information as the secondary response to the notification request.

4. The network control system according to claim 3, characterized in that the controller reads the state information between the primary response and the secondary response.

5. The network control system according to claim 3, characterized in that the secondary response from the device contains the updated version information and updated state information.

6. The network control system according to claim 1, characterized in that, the information of the device inside is operation screen information which shows an operation screen of the device, and
the device has the operation screen information of the device and the version information showing the version of the operation screen information when the operation screen information is updated, and
the controller reads the operation screen information and the version information from the device, and detects a change of the operation screen of the device by the version information.

7. The network control system according to claim 6, characterized in that, the operation screen information comprises a plurality of objects, and the controller issues the notification request to the device for requesting notification on changes of the operation screen information when the device operation screen information of the device is displayed on the display screen, and receives the version information as the primary response to the notification request, and receives the updated version information as the secondary response to the notification request when the operation screen information is changed in the device.

8. The network control system according to claim 7, characterized in that the secondary response from the device contains the updated version information and the updated object information.

9. The network control system according to claim 1, characterized in that the version information is a counter value which is incremented every time the information of the device inside is updated.

10. The device according to claim 1, characterized in that, the information of the device inside is the state information that indicates the device condition, and that the device has the state information that shows the device condition and the version information that shows the version of the state information to be updated when the state information is updated, and the change of the device condition is detected by the version information.

11. The controller according to claim 1, characterized in that the controller reads the state information that indicates the condition of the device and version information that shows the version of the state information from the device to be controlled, and detects the change of the device condition by the version information.

12. The device according to claim 4, characterized in that, the device returns the version information as the primary response to the notification request from the controller,
returns the updated version information as the secondary response of the notification request when the state information is changed in the device, and reads the state information between the primary response and the secondary response.

13. The controller according to claim 4, characterized in that, the controller received, as the primary response of the notification request, the version information that indicates the version of the state information, and receives the updated version information as the secondary response of the notification request when the operation screen information is changed in the device, and reads the state information of the device between the primary response and the secondary response.

14. The device according to claim 6, characterized in that, the device has the operation screen information that shows the operation screen and version information that shows version of the operation screen information to be updated when the operation screen information is updated, and the change of the operation screen is indicated by the version information.

15. The controller according to claim 6, characterized in that, the controller reads, from the device, the operation screen information that indicates the operation screen of the device and the version information that indicates the version of the operation screen information updated when the operation screen information is updated, and detects the change of the operation screen information of the device by the version information.

16. The device according to claim 7, characterized in that, the operation screen information comprises a plurality of objects, and the device returns the version information as the primary response to the notification request from the controller, and returns the updated version information as the secondary response to the notification request when the operation screen information is changed in the device.

17. The controller according to claim 7, characterized in that, the controller issues a notification request for requesting a notice of changes of the operation screen information to the device when the device operation screen information is displayed on the display screen, and receives the version information as the primary response to the notification request, and receives the updated version information as the secondary response to the notification request when the operation screen information is changed in the device.

18. The network control system according to claim 7, characterized in that, the object comprises invariable objects which are not varied irrespective of the device state and variable objects which are varied in accordance with the device state, and the controller reads the objects from the device, carries out caching to the invariable objects, and displays the objects on the display screen.

19. The network control system according to claim 18, characterized in that, the device has an invariable data set comprising invariable objects only and a variable data set comprising variable objects, and the controller carries out caching to the objects belonging to the invariable data set.

20. The device according to claim 18, characterized in that the objects comprise invariable objects which are not varied irrespective of the device state and variable objects which are varied in accordance with the device state.

21. The controller according to claim 18, characterized in that, the controller reads, from the device, the invariable objects which are not varied irrespective of the device state and variable objects which are varied in accordance with the device state, and carries out caching to the invariable objects, and displays the invariable objects and variable objects on the display screen.

22. A network control system in an AVC system to which a plurality of AV apparatuses are connected via a transmission line, comprising:
a controller equipped with a user interface; and
a device to be controlled,
wherein the device has a function information table that shows a device function and state, component elements constituting the function information table, and element version information that shows a version of the component elements of the function information table, and
wherein the controller detects changes of information in the function information table using the element version information when the controller uses the information in the function information table of the device.

23. The network control system according to claim 22, characterized in that, the device further has the function table version information that indicates the version of the function table, and
the controller detects changes of the information in the function information table using the function table version information when the controller uses the information in the function table of the device, and detects changes of information of the component elements using the element version information when the controller uses the information in the function information table of the device.

24. The network control system according to claim 22, characterized in that, the device has a plurality of components that comprise the function table and the element version information that indicates the version of the components for each component, and
the controller detects changes of the information of the component information using the element version information of the component when the controller uses the information in the components of the device.

25. The network control system according to claim 22, characterized in that, the controller issues a notification request to the device for requesting notification of the change within the notification range using the information on the notification range indicated by each component when the controller uses the information in the function table of the device, and
receives the element version information corresponding to the notification range, as the primary response to the notification request,
and
if the information within the notification range is changed, the controller receives the updated element version information as the secondary response to the notification request.

26. The network control system according to claim 25, characterized in that the controller reads the information within the notification range between the primary response and the secondary response.

27. The network control system according to claim 22, characterized in that the element version information indicating the version of the component is the function table version information when the component information is changed.

28. The network control system according to claim 22, characterized in that the components are menus.

29. The network control system according to claim 22, characterized in that the components are display parts.

30. The network control system according to claim 25, characterized in that the secondary response from the device contains the updated element version information and the updated information.

31. A network control system having a controller equipped with user interface connected to a device to be controlled via a transmission line, characterized in that, the device comprises:
apparatus information holding means (7, 8) for holding apparatus information in device, said apparatus information containing apparatus configuration information which indicates device configuration information and containing operation screen information which indicates a function and condition of the device and for configuring an operation screen of the device; and
version information generation managing means (9, 17, 18) which, when the information held in the apparatus information holding means (7, 8) changes, generates version information indicative of a change generation thereof to carry out version management,
wherein, when a notification request is issued from the controller to the device in response to the change of the apparatus information in device, a response from the device in response to said notification request contains the version information.

32. The network control system according to claim 31, wherein the version information managing means (9, 17, 18) includes a version information generating means (18) and the version information is obtained by incrementing the counter value in the version information generating means 18 every time the apparatus information of the device inside is changed.

33. The network control system according to claim 31, wherein the operation screen information is a table of contents information and action state information that indicate the device functions and state, and contains objects which are components of the operation screen information and identifiers (ID) for identifying the objects, wherein the objects contain a function menu (51), display part (52), text data objects, and still picture data objects.

34. The network control system according to claim 31, wherein the controller has means (12, 13) for storing and controlling the apparatus information and version information in relation to each other when the controller reads the apparatus information in the device and the version information.

35. The network control system according to claim 31, wherein the notification request (101) issued from the controller contains information of the notification range that indicates the range which the controller hopes to bring the information in agreement with the device, and the primary response (111) returned from the device as the response thereto contains the version information corresponding to the notification range.

36. The network control system according to claim 35, wherein when the controller receives the secondary response (121) from the device to the notification request, the controller detects that the objects in the device are changed, and sends the second notification request (102) to the device before the changed object is requested.

37. The network control system according to claim 35, wherein the operation screen information has a function menu set list (60), and the function menu set list (60) contains function table version information, and each of the function menu lists (61, 62, 63) has the element version information, and these function table version information and the element version information are generated by the version information generation managing means (9, 17, 18).

38. The network control system according to claim 35, wherein the version information is included in the menu list response (211), display part response (231) and object response (272) which are returned from the device to the controller.

39. A network control method having a controller equipped with user interface connected to a device to be controlled via a transmission line, characterized by comprising the steps of:
holding apparatus information in the device, said apparatus information containing apparatus configuration information which indicates device configuration information and containing operation screen information which indicates a function and condition of the device and for configuring an operation screen of the device;
when said held information is changed, generating version information indicative of a change generation thereof to carry out version management, and
when a notification request is issued from the controller to the device in response to the change of the apparatus information in the device, sending a response to the controller from the device in response to said notification request, wherein the response from the device contains the version information.

40. The network control system according to claim 39, wherein the version information is obtained by incrementing a counter value every time the apparatus information in the device is updated.

41. The network control system according to claim 39, wherein the device sends the primary and secondary responses to the controller in response to the notification request from the controller, and when the controller receives the secondary response, the controller judges that the version information is changed, and using an identifier of the updated apparatus information contained in the secondary response, reads the updated apparatus information (step 509) and updates the version information in the controller (step 510).
